# EUROPEAN PATENT APPLICATION

(11) **EP 4 701 195 A1**
(43) Date of publication of application: **25.02.2026**
(21) Application number: 24860078.5
(22) Date of filing: 12.06.2024
(51) Int. Cl.: H04N 19/89, H04N 19/105, H04N 19/177, H04N 19/176, H04N 19/172, H04N 21/438, H04N 21/436, H04N 21/4363, H04N 21/6405, H04N 21/6408

(54) **IMAGE PROCESSING DEVICE AND METHOD**

(30) Priority: 25.08.2023 KR 20230112313; 12.10.2023 KR 20230135937
(71) Applicant: Samsung Electronics Co., Ltd., Suwon-si, Gyeonggi-do 16677 (KR)
(72) Inventor: JUNG, Chanho, Suwon-si Gyeonggi-do 16677 (KR)
(74) Representative: Appleyard Lees IP LLP
(86) International application number: PCT/KR2024/008038
(87) International publication number: WO 2025/048154

(57) **Abstract**

The present disclosure relates to a receiving device of an image processing system. The receiving device is configured to: receive, from a transmitting device, at least one data packet including data in a first frame; carry out decoding of the first frame on the basis of the at least one data packet; identify whether a decoding failure of the first frame occurs; and, on the basis of identifying that a decoding failure of the first frame has occurred, transmit, to the transmitting device, first information related to at least one first block in which the decoding failure has occurred. The first information may include block ID information of the at least one first block in which the decoding failure has occurred, and frame ID information of the first frame to which the at least one first block belongs.

## Description

### [Technical Field]

The disclosure relates to an image processing device and method.

### [Background Art]

To increase the compression rate of an image, an image processing device may use a compression scheme that encodes subsequent frames/pictures by referencing already encoded frames/pictures.

When using this compression scheme, errors occurring in the referenced frame are transferred to subsequent frames. For example, a decoding error occurring in a referenced frame will affect decoding of subsequent frames. The propagation of such an error may lead to continuous deterioration of image quality. Therefore, it is necessary to consider ways to prevent/reduce errors occurring in previous frames from affecting subsequent frames.

### [Disclosure]

### [Technical Solution]

A reception device in an image processing system, according to an example embodiment of the disclosure, may comprise: a communication unit comprising communication circuitry, memory storing a program including at least one instruction, and at least one processor, comprising processing circuitry, connected to the communication unit and the memory and configured to execute the at least one instruction of the program stored in the memory. At least one processor, individually and/or collectively, may be configured to control the reception device to: receive, from a transmission device, at least one data packet including data of a first frame, perform decoding on the first frame based on the at least one data packet, identify whether a failure in decoding on the first frame occurs, and based on identifying that the failure in decoding on the first frame occurs, transmit, to the transmission device, first information related to at least one first block where the decoding failure occurs, wherein the first information may include block identifier (ID) information about the at least one first block to which the decoding failure occurs and frame ID information about the first frame where the at least one first block belongs.

A transmission device in an image processing system, according to an example embodiment of the disclosure, may comprise: a communication unit comprising communication circuitry, memory storing a program including at least one instruction, and at least one processor, comprising processing circuitry, connected to the communication unit and the memory and configured to execute the at least one instruction of the program stored in the memory. At least one processor, individually and/or collectively, may be configured to control the transmission device to: transmit, to a reception device, at least one data packet including data of a first frame, receive, from the reception device, first information related to at least one block where a decoding failure in the first frame occurs, the first information including block ID information about the at least one first block where the decoding failure occurs and frame ID information about the first frame to which the at least one first block belongs, identify the at least one first block in the first frame based on the first information, process the at least one first block not to be referenced by blocks in a second frame encoded based on the first information being received, and perform encoding on the second frame.

A method performed by a reception device in an image processing system, according to an example embodiment of the disclosure, may comprise: receiving, from a transmission device, at least one data packet including data of a first frame, performing decoding on the first frame based on the at least one data packet, identifying whether a failure in decoding on the first frame occurs, and based on identifying that the failure in decoding on the first frame occurs, transmitting, to the transmission device, first information related to at least one first block to which the decoding failure occurs, wherein the first information may include block ID information about the at least one first block where the decoding failure occurs and frame ID information about the first frame where the at least one first block belongs.

A method performed by a transmission device in an image processing system, according to an example embodiment of the disclosure, may comprise: transmitting, to a reception device, at least one data packet including data of a first frame, receiving, from the reception device, first information related to at least one block where a decoding failure in the first frame occurs, the first information including block ID information about the at least one first block where the decoding failure occurs and frame ID information about the first frame to which the at least one first block belongs, identifying the at least one first block in the first frame based on the first information, processing the at least one first block not to be referenced by blocks in a second frame encoded based on the first information being received, and performing encoding on the second frame.

### [Description of Drawings]

The above and other aspects, features, and advantages of certain embodiments of the disclosure will be more apparent from the following detailed description, taken in conjunction with the accompanying drawings, in which:
FIG. 1A is a block diagram illustrates an example image processing system according to an embodiment of the disclosure;
FIG. 1B is a block diagram illustrating an example configuration of a transmission device according to an embodiment of the disclosure;
FIG. 1C is a block diagram illustrating an example configuration of a reception device according to an embodiment of the disclosure;
FIG. 2 is a block diagram illustrating example image processing operations of a transmission device and a reception device according to an embodiment of the disclosure;
FIG. 3 is a block diagram illustrating an example configuration of an image encoding unit of a transmission device according to an embodiment of the disclosure;
FIG. 4 is a block diagram illustrating an example configuration of an image decoding unit of an image reception device according to an embodiment of the disclosure;
FIGS. 5A and 5B are diagrams illustrating an example image frame group according to an embodiment of the disclosure;
FIG. 6A is a signal flow diagram illustrating an example image processing procedure of an image processing system according to an embodiment of the disclosure;
FIGS. 6B and 6C are diagrams illustrating an example in which a decoding failure occurs in an image processing procedure according to an embodiment of the disclosure;
FIG. 7 is a signal flow diagram illustrating an example image processing procedure of an image processing system according to an embodiment of the disclosure;
FIG. 8 is a flowchart illustrating example operations of a transmission device in an image processing procedure according to an embodiment of the disclosure;
FIG. 9 is a flowchart illustrating example operations of a reception device in an image processing procedure according to an embodiment of the disclosure;
FIG. 10 is a signal flow diagram illustrating an example image processing procedure of an image processing system according to an embodiment of the disclosure;
FIG. 11A is a flowchart illustrating example operations of a transmission device in an image processing procedure according to an embodiment of the disclosure;
FIG. 11B is a flowchart illustrating example operations of a transmission device in an image processing procedure according to an embodiment of the disclosure;
FIG. 12A is a flowchart illustrating example operations of a reception device in an image processing procedure according to an embodiment of the disclosure;
FIG. 12B is a flowchart illustrating example operations of a reception device in an image processing procedure according to an embodiment of the disclosure; and
FIGS. 13A and 13B are diagrams illustrating an example method for preventing/reducing a decoding failure in an image processing procedure according to an embodiment of the disclosure.

### [Mode for Invention]

Various embodiments of the disclosure are now described in greater detail with reference to the accompanying drawings. However, the disclosure may be implemented in other various forms and is not limited to the embodiments set forth herein. The same or similar reference denotations may be used to refer to the same or similar elements throughout the disclosure and the drawings. Further, for clarity and brevity, no description may be made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in various embodiments, the functions mentioned in the blocks may occur in different orders. For example, two blocks that are consecutively shown may be performed substantially simultaneously or in a reverse order depending on corresponding functions.

As used herein, the term "unit" may refer, for example, to a software element and/or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

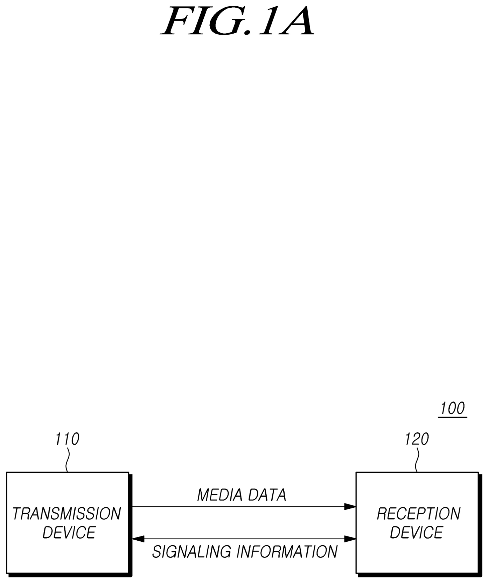

FIG. 1A is a block diagram illustrating an example image processing system according to an embodiment of the disclosure.

Referring to FIG. 1A, an image processing system 100 may include a transmission device (or, transmitting device) 110 and a reception device (or, receiving device) 120, each including various circuitry. In the disclosure, the transmission device 110 may be referred to as an image transmission device or an image providing device. The reception device 120 may be referred to as an image reception device or an image playback device.

According to an example embodiment, the transmission device 110 may include transmission circuitry and transmit media data (e.g., video and image) to the reception device 120. For example, the transmission device 110 may transmit an image signal including media data (e.g., video and image) to the reception device 120 through a network, and the reception device 120 may receive the image from the transmission device 110 and play the image signal. The transmission device 110 may encode the image signal by removing duplicate information in the video signal to the extent that it cannot be visually detected and compressing it. The transmission device 110 may efficiently store, transmit, and manage the image signal by encoding the image signal within a set compression rate range. The image signal may include, but is not limited to, a real-time encoded image including e.g., a screen mirroring image, a video conference image and game image.

According to an embodiment, the transmission device 110 and the reception device 120 may exchange signaling (or signaling messages) for delivering and/or consuming media data (or image signals including media data). For example, the signaling message may include FEC-related information.

According to an embodiment, the transmission device 110 may include various image source devices, such as a TV, a PC, a smartphone, a tablet, a set-top box, a game console, and a server and the reception device 120 may include various image playback devices, such as a TV, a smartphone, a tablet, and a PC. It is apparent to one of ordinary skill in the art that the transmission device 110 and the reception device 120 are not limited to a specific type of devices.

According to an embodiment, the transmission device 110 and the reception device 120 may transmit/receive image signals through a network. According to various embodiments, the network connecting the transmission device 110 and the reception device 120 may include a short-range communication network, such as wireless fidelity (Wi-Fi), or a remote communication network, such as a cellular network, a next-generation communication network, the Internet, or a computer network (e.g., local area network (LAN) or wide area network (WAN)), and may communicate based on an IP communication protocol. The cellular network may include global system for mobile communications (GSM), enhanced data GSM environment (EDGE), code division multiple access (CDMA), time division multiplexing access (TDMA), 5G, long-term evolution (LTE), and LTE-advanced (LTE-A). The network may include connections of network components, such as hubs, bridges, routers, switches, and gateways. The network may include one or more connected networks, e.g., a multi-network environment, including public networks such as the Internet and private networks such as business private networks. Access to the network may be provided via one or more wired or wireless access networks. Further, the network may support Internet-of-things (IoT) networks, which exchange information between distributed components, e.g., things, and process the information.

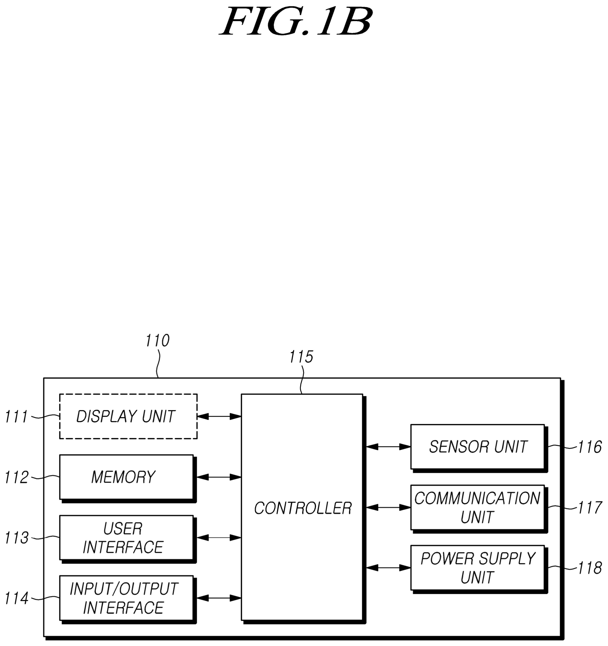

FIG. 1B is a block diagram illustrating an example configuration of a transmission device according to an embodiment of the disclosure.

Referring to FIG. 1B, a transmission device 110 may include a display unit (e.g., including a display) 111, memory 112, a user interface (e.g., including interface circuitry) 113, an input/output interface (e.g., including input/output circuitry) 114, a controller (e.g., including processing circuitry) 115, a sensor unit (e.g., including a sensor) 116, a communication unit (e.g., including communication circuitry) 117, and/or a power supply unit (e.g., including a power supply) 118. In an embodiment, at least one (e.g., the display unit 111) of the components may be omitted from the transmission device 110, or one or more other components may be added in the electronic device 101. In an embodiment, some of these components may be integrated into one component. In the disclosure, the controller 115 may be defined as a circuit or application-specific integrated circuit or at least one processor.

According to an embodiment, the display unit 111 may include a display and visually provide information to the outside (e.g., the user) of the transmission device 110. The display unit 111 may include, for example, a display, a hologram device, or a projector and control circuitry to control a corresponding one of the display, hologram device, and projector. According to an embodiment, the display unit 111 may include a touch sensor configured to detect a touch, or a pressure sensor configured to measure the intensity of a force generated by the touch.

According to an embodiment, the memory 112 may store various data used by at least one component (e.g., the controller 115 or the sensor unit 116) of the transmission device 110. The various data may include, for example, software (e.g., the program) and input data or output data for a command related thereto. The memory 112 may include a volatile memory or a non-volatile memory.

According to an embodiment, the user interface 113 may include various circuitry and provide an interface for facilitating interaction between the user and the transmission device 110. The user interface 113 may provide, e.g., a method, circuitry, and tools for the user to manipulate the transmission device 110 and obtain information. The user interface 113 may include, but is not limited to, e.g., graphic user interfaces, text-based user interfaces, touch interfaces, or speech recognition interfaces.

According to an embodiment, the input/output interface 114 may include various circuitry and receive an input signal (e.g., command or data) to be used in a component (e.g., the controller 115) of the transmission device 110 from the outside (e.g., the user) of the transmission device 110 or may output an output signal to the outside. The input/output interface 114 may include, for example, a microphone, a speaker, an audio, a mouse, a keyboard, keys (e.g., buttons), or a digital pen (e.g., a stylus pen).

According to an embodiment, the controller 115 may include various processing circuitry and control the overall operation of the transmission device 110. The controller 115 may execute, for example, software (e.g., a program) to control at least one other component (e.g., a hardware or software component) of the transmission device 110 coupled with the controller, and may perform various data processing or computation. According to an embodiment, as at least part of the data processing or computation, the controller 115 may store a command or data received from another component (e.g., the sensor unit 116 or the communication unit 117) in the memory 112, process the command or the data stored in the memory 112, and store resulting data in the memory 112. The controller 115 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor," "at least one processor," and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the controller 115 may include sub-components (e.g., processors) including, e.g., a CPU, a graphics processing unit (GPU), a neural processing unit (NPU), an image signal processor (ISP), a display controller, memory controller, and/or a communication processor (CP). The above-described sub-components are merely examples. For example, the controller 115 may further include other sub-components. For example, some sub-components may be omitted from the controller 115.

According to an embodiment, the sensor unit 116 may include at least one sensor and detect an operational state (e.g., power or temperature) of the transmission device 110 or an external environmental state (e.g., the user's state), and then generate an electrical signal or data value corresponding to the detected state. The sensor unit 116 may include, e.g., a gesture sensor, a gyro sensor, an atmospheric pressure sensor, a magnetic sensor, an acceleration sensor, a grip sensor, a proximity sensor, a color sensor, an infrared (IR) sensor, a bio sensor, a temperature sensor, a humidity sensor, or an illuminance sensor.

According to an embodiment, the communication unit 117 may include various communication circuitry and support establishing a direct (e.g., wired) communication channel or a wireless communication channel between the transmission device 110 and the external electronic device (e.g., reception device 120, another electronic device, or a server) and performing communication via the established communication channel. The communication unit 117 may include one or more communication processors (e.g., including processing circuitry) that are operable independently from the controller 115 and supports a direct (e.g., wired) communication or a wireless communication. According to an embodiment, the communication unit 117 may include a wireless communication module (e.g., a cellular communication module, a short-range wireless communication module, or a global navigation satellite system (GNSS) communication module) or a wired communication module (e.g., a LAN communication module or a power line communication (PLC) module). A corresponding one of these communication modules may communicate with the external electronic device via a first network (e.g., a short-range communication network, such as Bluetooth^{™}, Wi-Fi direct, or infrared data association (IrDA)) or a second network (e.g., a long-range communication network, such as a legacy cellular network, a 5G network, a next-generation communication network, the Internet, or a computer network (e.g., LAN or WAN). These various types of communication modules may be implemented as a single component (e.g., a single chip), or may be implemented as multi components (e.g., multi chips) separate from each other.

According to an embodiment, the power supply unit 118 may include a power supply and supply power to the transmission device 110 and manage the power supplied to the transmission device 110.

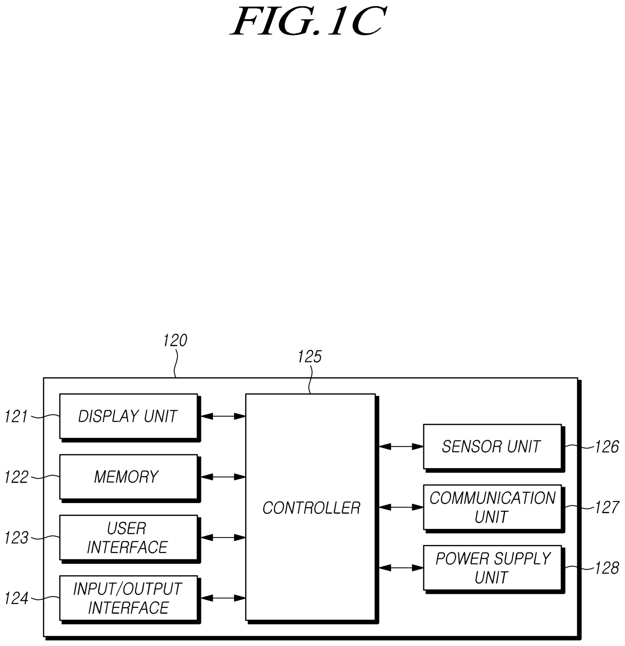

FIG. 1C is a block diagram illustrating an example configuration of a reception device according to an embodiment of the disclosure.

Referring to FIG. 1C, a reception device 120 may include a display unit (e.g., including a display) 121, memory 122, a user interface (e.g., including interface circuitry) 123, an input/output interface (e.g., including input/output circuitry) 124, a controller (e.g., including processing circuitry) 125, a sensor unit (e.g., including a sensor) 126, a communication unit (e.g., including communication circuitry) 127, and/or a power supply unit (e.g., including a power supply) 128. In an embodiment, at least one (e.g., the sensor unit 126) of the components may be omitted from the transmission device 110, or one or more other components may be added in the electronic device 101. In an embodiment, some of these components may be integrated into one component. In the disclosure, the controller 125 may include a circuit or application-specific integrated circuit or at least one processor.

According to an embodiment, the display unit 121 may include a display and visually provide information to the outside (e.g., the user) of the reception device 120. The display unit 121 may include, for example, a display, a hologram device, or a projector and control circuitry to control a corresponding one of the display, hologram device, and projector. According to an embodiment, the display unit 121 may include a touch sensor configured to detect a touch, or a pressure sensor configured to measure the intensity of a force generated by the touch.

According to an embodiment, the memory 122 may store various data used by at least one component (e.g., the controller 125 or the sensor unit 126) of the reception device 120. The various data may include, for example, software (e.g., the program) and input data or output data for a command related thereto. The memory 122 may include a volatile memory or a non-volatile memory.

According to an embodiment, the user interface 123 may include various circuitry and provide an interface for facilitating interaction between the user and the reception device 120. The user interface 123 may provide, e.g., a method, circuitry, and tools for the user to manipulate the reception device 120 and obtain information. The user interface 123 may include, but is not limited to, e.g., graphic user interfaces, text-based user interfaces, touch interfaces, or speech recognition interfaces.

According to an embodiment, the input/output interface 124 may include various circuitry and receive an input signal (e.g., command or data) to be used in a component (e.g., the controller 125) of the reception device 120 from the outside (e.g., the user) of the reception device 120 or may output an output signal to the outside. The input/output interface 124 may include, for example, a microphone, a speaker, an audio, a mouse, a keyboard, keys (e.g., buttons), or a digital pen (e.g., a stylus pen).

According to an embodiment, the controller 125 may include various processing circuitry and control the overall operation of the reception device 120. The controller 125 may execute, for example, software (e.g., a program) to control at least one other component (e.g., a hardware or software component) of the reception device 120 coupled with the controller and may perform various data processing or computation. According to an embodiment, as at least part of the data processing or computation, the controller 125 may store a command or data received from another component (e.g., the sensor unit 126 or the communication unit 127) in the memory 122, process the command or the data stored in the memory 122, and store resulting data in the memory 122.

According to an embodiment, the controller 125 may include sub components (e.g., processors) including, e.g., a CPU, a GPU, an NPU, an ISP, a display controller, memory controller, and/or a CP. The above-described sub-components are merely examples. For example, the controller 125 may further include other sub components. For example, some sub-components may be omitted from the controller 125. The controller 125 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the sensor unit 126 may include at least one sensor and detect an operational state (e.g., power or temperature) of the reception device 120 or an external environmental state (e.g., the user's state), and then generate an electrical signal or data value corresponding to the detected state. The sensor unit 126 may include, e.g., a gesture sensor, a gyro sensor, an atmospheric pressure sensor, a magnetic sensor, an acceleration sensor, a grip sensor, a proximity sensor, a color sensor, an IR sensor, a bio sensor, a temperature sensor, a humidity sensor, or an illuminance sensor.

According to an embodiment, the communication unit 127 may include various communication circuitry and support establishing a direct (e.g., wired) communication channel or a wireless communication channel between the transmission device 120 and the external electronic device (e.g., reception device 110, another electronic device, or a server) and performing communication via the established communication channel. The communication unit 127 may include one or more communication processors that are operable independently from the controller 125 and supports a direct (e.g., wired) communication or a wireless communication. According to an embodiment, the communication unit 127 may include a wireless communication module (e.g., a cellular communication module, a short-range wireless communication module, or a GNSS communication module) or a wired communication module (e.g., a LAN) communication module or a PLC module). A corresponding one of these communication modules may communicate with the external electronic device via a first network (e.g., a short-range communication network, such as Bluetooth^{™}, Wi-Fi direct, or IrDA) or a second network (e.g., a long-range communication network, such as a legacy cellular network, a 5G network, a next-generation communication network, the Internet, or a computer network (e.g., LAN or WAN). These various types of communication modules may be implemented as a single component (e.g., a single chip), or may be implemented as multi components (e.g., multi chips) separate from each other.

According to an embodiment, the power supply unit 128 may include a power supply and supply power to the reception device 120 and manage the power supplied to the reception device 120.

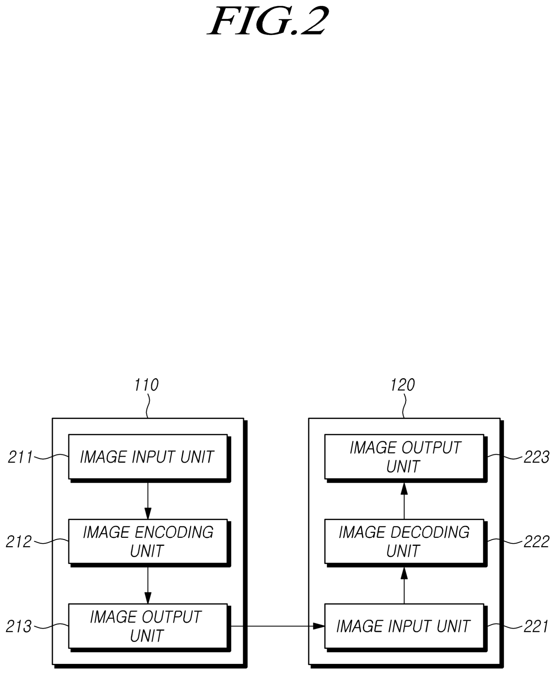

FIG. 2 is a block diagram illustrating image example processing operations of a transmission device and a reception device according to an embodiment of the disclosure.

Referring to FIG. 2, a transmission device 110 may include an image input unit (e.g., including various circuitry) 211, an image encoding unit (e.g., including an encoder) 212, and an image output unit (e.g., including various circuitry) 213. The transmission device 110 may include additional components other than the illustrated components, or at least one of the illustrated components may be omitted.

According to an embodiment, operations of the image input unit 211, the image encoding unit 212, and the image output unit 213 may be performed by a transmission device (e.g., the transmission device 110 of FIGS. 1A and 1B) and/or a controller (e.g., the controller 115 of FIG. 1B) of the transmission device.

According to an embodiment, the image input unit 211 may include various circuitry and obtain input data. The input data may include, e.g., media data (e.g., image data or image data), but is not limited thereto. The input data may be received from the outside of the transmission device 110 or may be embedded in the transmission device 110. The image input unit 211 may receive input data from the outside in a wired or wireless manner using a communication unit (e.g., the communication unit 117 of FIG. 1B).

According to an embodiment, the image encoding unit 212 may include an encoder and generate encoded data by encoding input data using encoding configuration information. For example, the image encoding unit 212 may perform a series of procedures such as prediction, transformation, quantization, etc. for compression and encoding efficiency. The encoding configuration information may include, e.g., information about an encoding/decoding scheme (e.g., codec information) and information about a bitrate used to encode media data, but is not limited thereto. The encoding/decoding scheme may include, e.g., an advanced video coding (AVC)/H.264 scheme, a high efficiency video coding (HEVC)/H.265 scheme, and a versatile video coding (VVC)/H.266 scheme, but is not limited thereto.

According to an embodiment, the image encoding unit 212 may perform encoding in units of frames (or pictures).

According to an embodiment, the image encoding unit 212 may provide the encoded data to the image output unit 213 in the form of a bitstream.

According to an embodiment, the image output unit 213 may include various circuitry and transmit the encoded data to the reception device 120 using the communication unit 117. For example, the image output unit 213 may transmit the encoded data through at least one packet. For example, the image output unit 213 may transmit at least one data packet including the encoded data to the reception device 120.

According to an embodiment, the data packet may include a header and a payload including at least a portion of the encoded data.

According to an embodiment, the header of the data packet may include packet sequence information and/or encoding/decoding-related information (e.g., codec information and bit rate information).

According to an embodiment, the packet sequence information may indicate the sequence number of the corresponding data packet. The reception device 120 may identify the sequence of the corresponding data packet based on the packet sequence number information. Accordingly, the reception device 120 may sequentially process (e.g., decode) data packets for the corresponding frame.

According to an embodiment, the reception device 120 may identify whether the data packet is obtained (or received) at a time point when processing for the corresponding data packet is required, based on the packet sequence information.

According to an embodiment, the image output unit 213 (or the transmission device 110) may transmit a data packet to the reception device 120 using a unicast method, a multicast method, or a broadcast method.

According to an embodiment, the image output unit 213 may transmit at least one data packet including encoded data based on a transmission rate of the data packet.

According to an embodiment, the transmission rate of the data packet may be, e.g., the number of data packets transmitted for a predetermined time or the number of bits of data (e.g., encoded data or media data) included in the data packet transmitted for a predetermined time. For example, the transmission rate of the data packet may be the number of data packets transmitted for a predetermined time (e.g., for 1/60 seconds in the case of 60 fps). For example, the transmission rate of the data packet may be the number of bits of the source data transmitted per second (e.g., the bit rate (bits per second (bps)) of the source data. According to an embodiment, the transmission rate of the data packet may be associated with the bit rate used to encode media data. For example, as the bit rate increases, the transmission rate of the data packet may increase (proportional relationship).

According to an embodiment, the image output unit 213 may transfer the encoded data to the reception device 120 through a digital storage medium. The digital storage medium may include various storage media such as universal serial bus (USB), secure digital (SD), compact disc (CD), digital video disc (DVD), Blu-ray, hard-disk drive (HDD), and solid-state drive (SSD).

The reception device 120 may include an image input unit (e.g., including various circuitry) 221, an image decoding unit (e.g., including a decoder) 222, and an image output unit (e.g., including various circuitry) 223. The image output unit 223 may include a display unit, and the display unit may be configured as a separate device or an external component. The reception device 120 may include additional components other than the illustrated components, or may omit at least one of the illustrated components.

According to an embodiment, operations of the image input unit 221, the image decoding unit 222, and the image output unit 223 may be performed by a reception device (e.g., the reception device 120 of FIGS. 1A and 1C) and/or a controller (e.g., the controller 215 of FIG. 1C) of the reception device.

According to an embodiment, the image input unit 221 may include various circuitry and obtain the received signal (image signal).

The image input unit 221 may receive an image signal from the transmission device 110 using a communication unit (e.g., the communication unit 127 of FIG. 1C). According to an embodiment, the image input unit 221 may receive the encoded data from the transmission device 110 using the communication unit 127. For example, the image input unit 221 may receive at least one packet including encoded data transmitted (or processed) based on the transmission rate of the data packet from the transmission device 110.

According to an embodiment, the image input unit 221 may obtain the encoded data through a digital storage medium.

According to an embodiment, the image decoding unit 222 may include a decoder and be configured to perform an inverse operation of the operation of the image encoding unit 212. For example, the image decoding unit 222 may decode encoded data by performing a series of procedures such as dequantization, inverse transformation, and prediction corresponding to the image encoding unit 212.

According to an embodiment, the image decoding unit 222 may decode the forward error correction (FEC)-decoded data using the decoding configuration information, thereby generating decoded data. The decoding configuration information may include, e.g., information about an encoding/decoding scheme (e.g., codec information) and information about a bit rate, but is not limited thereto.

According to an embodiment, the image output unit 223 may include various circuitry and render the decoded data. The rendered data may be displayed through the display unit.

The transmission device 110 and the reception device 120 may include additional components other than the illustrated components, or at least one of the illustrated components may be omitted. For example, the transmission device 110 may further include an FEC encoder for FEC, and the reception device 120 may further include an FEC decoder. In this case, the transmission device 110 may FEC encode the data packets, generate FEC packets for restoring the data packets, and transmit the FEC packets together with the related data packets, and the reception device 120 may restore the dropped data packet(s) using the FEC packet(s). According to an embodiment, FEC encoding may be performed after encoding in the transmission device 110, and FEC decoding may be performed before decoding in the reception device 120.

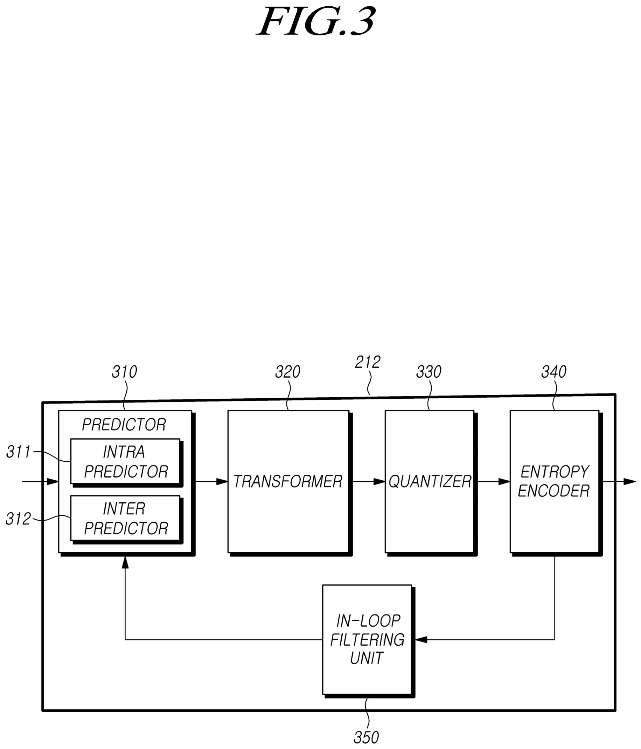

FIG. 3 is a block diagram illustrating an example configuration of an image encoding unit of a transmission device according to an embodiment of the disclosure.

Referring to FIG. 3, the image encoding unit 212 may include a predictor 310, a transformer 320, a quantizer 330, an entropy encoder 340, and an in-loop filter 350, each including various circuitry. The image encoding unit 212 may include additional components other than the illustrated components, or at least one of the illustrated components may be omitted. All or at least some of the plurality of components of the image encoding unit 212 may be implemented as one hardware component (e.g., an encoder or a processor) according to an embodiment. Also, the image encoding unit 212 may further include memory. The memory may be implemented by a digital storage medium and may include a buffer (e.g., a frame buffer) for buffering the picture/frame encoded during encoding.

According to an embodiment, the image encoding unit 212 may split the input image signal (or picture/frame) into one or more processing units.

For example, the processing unit may be a coding unit. The coding unit may be obtained by recursively splitting a coding tree unit (CTU) or a largest coding unit (LCU) according to a quad-tree/binary-tree/ternary-tree (QT/BT/TT) structure. For example, one coding unit may be split into a plurality of coding units of a lower depth based on a quadtree structure, a binary tree structure, and/or a ternary tree structure. An encoding procedure according to the disclosure may be performed based on a final coding unit that is no longer split. The encoding procedure may include procedures such as prediction, transformation, and quantization to be described below.

For example, the processing unit of the encoding procedure may be a prediction unit or a transform unit . The prediction unit and the transform unit each may be split or partitioned from the final coding unit. The prediction unit may be a unit of sample prediction, and the transform unit may be a unit for deriving a transform coefficient and/or a unit for deriving a residual signal from the transform coefficient. In the disclosure, pixel may refer to a minimum unit of one picture/frame (or image). Further, sample may be used as a term corresponding to pixel and may represent a pixel or a value of a pixel.

According to an embodiment, the predictor 310 may perform prediction on a current block (a block to be processed) and may generate a predicted block including prediction samples of the current block. The predictor 310 may determine whether intra prediction is applied or inter prediction is applied in units of the current block or the coding unit. The predictor 310 may generate various pieces of information about prediction of the current block and transfer the generated various pieces of information to the entropy encoder 340. The prediction-related information may be encoded by the entropy encoder 340 and be output in the form of a bitstream.

According to an embodiment, the intra predictor 311 may predict the current block by referencing samples in the current picture/frame. The referenced samples may be positioned near or away from the current block according to an intra prediction mode and/or an intra prediction scheme.

According to an embodiment, the inter predictor 312 may derive the predicted block for the current block, based on the reference block specified by the motion vector on the reference picture/frame. In this case, in order to reduce the amount of motion information transmitted in the inter prediction mode, the motion prediction information may be predicted in units of a block, a sub-block, or a sample, based on correlation of the motion information between the neighboring block and the current block. The motion prediction information may include a reference picture/frame ID (or index) and a motion vector. The motion prediction information may further include inter prediction direction (L0 direction, L1 direction, etc.) information.

According to an embodiment, the inter predictor 312 may derive the predicted block for the current block using the at least one piece of motion prediction information as the inter prediction information. For example, the inter predictor 312 may derive the predicted block for the current block using at least one of the first motion prediction information including the first motion vector MBL0 and the second motion prediction information including the second motion vector MBL1 as inter prediction information for the current block of the image signal.

The prediction signal generated through the predictor 310 may be used to generate a reconstructed or may be used to generate a residual signal. A residual signal generated by subtracting the prediction signal (predicted block) from the input image signal (original block) may be transmitted to the transformer 320.

According to an embodiment, the transformer 320 may include various circuitry and apply a transform scheme to the residual signal, generating transform coefficients. For example, the transform scheme may include at least one of a discrete cosine transform (DCT), discrete sine transform (DST), Karhunen-Loeve transform (KLT), graph-based transform (GBT), or conditionally non-linear transform (CNT). The GBT may refer, for example, to a transform obtained from a graph in which information for the relationship between pixels is represented. The CNT may refer, for example, to a transform that is obtained based on generating a prediction signal using all previously reconstructed pixels. The transform process may apply to rectangular pixel blocks with the same size or may also apply to non-squared, variable-size blocks.

According to an embodiment, the quantizer 330 may include various circuitry and quantize the transform coefficients and transmit them to the entropy encoder 340. The entropy encoder 340 may encode the quantized signal (information about the quantized transform coefficients) and output it as a bitstream. The information for the quantized transform coefficients may be referred to as residual information. The quantizer 330 may re-sort the block-shaped quantized transform coefficients in the form of a one-dimension vector, based on a coefficient scan order and generate the information for the quantized transform coefficients based on the one-dimensional form of quantized transform coefficients. According to an embodiment, the entropy encoder 340 may perform various encoding methods, such as, e.g., exponential Golomb, context-adaptive variable length coding (CAVLC), or context-adaptive binary arithmetic coding (CABAC).

According to an embodiment, the in-loop filtering unit 350 may include a filter and restore compression deterioration by applying filtering to the image resulting from the encoding process. For example, the in-loop filtering unit 350 may apply various filtering methods to the reconstructed picture/frame to generate a modified reconstructed picture/frame. The various filtering methods may include, e.g., deblocking filtering, sample adaptive offset, adaptive loop filter, or bilateral filter. The modified reconstructed picture/frame may be stored in the memory and used as a reference picture/frame in the predictor 310.

The memory may store motion prediction information about the block from which motion prediction information in the current picture/frame has been derived (or encoded) and/or motion prediction information about blocks in a picture/frame already reconstructed. The memory may store reconstructed samples of reconstructed blocks in the current picture/frame, and the stored reconstructed samples may be transferred to the intra-predictor 311.

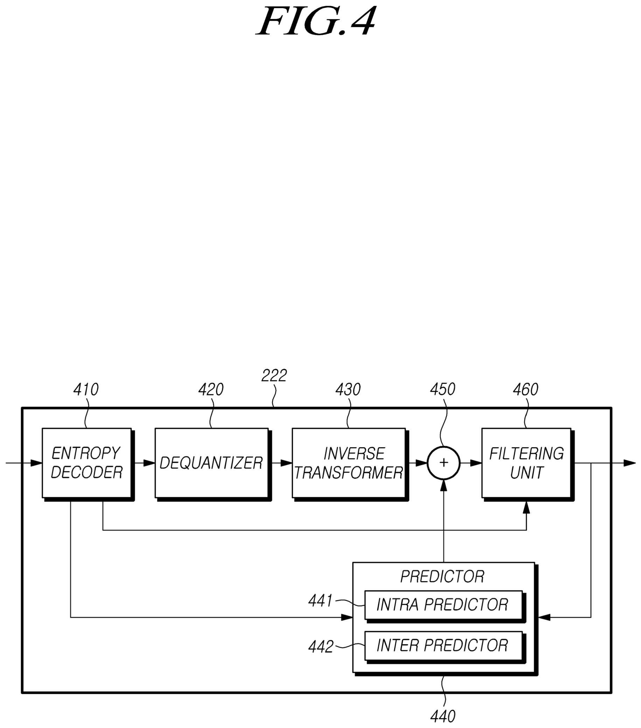

FIG. 4 is a block diagram illustrating an example configuration of an image decoding unit of an image reception device according to an embodiment of the disclosure.

Referring to FIG. 4, an image decoding unit 222 may include an entropy decoding unit 410, a dequantizer 420, an inverse transformer 430, a predictor 440, an adder 450, and a filtering unit 460, each of which may include various circuitry. The image decoding unit 222 may include additional components other than the illustrated components, or at least one of the illustrated components may be omitted. All or at least some of the plurality of components of the image decoding unit 222 may be implemented as one hardware component (e.g., decoder or processor) according to an embodiment. Further, the image decoding unit 222 may further include memory. The memory may be implemented by a digital storage medium and may include a buffer (e.g., frame buffer) for buffering the decoded picture/frame.

The image decoding unit 222 may reconstruct an image signal by performing a process corresponding to the process performed by the image encoding unit 212 described above with reference to FIG. 3. For example, the image decoding unit 222 may perform decoding using a processing unit applied by the image encoding unit 212. For example, the decoding processing unit may be, e.g., a coding unit. The coding unit may be a coding tree unit or may be obtained by splitting the largest coding unit.

According to an embodiment, the entropy decoder 410 may parse the bitstream to derive information necessary for image reconstruction (or picture/frame reconstruction). For example, the entropy decoder 410 may decode information in a bitstream based on a decoding method such as exponential Golomb, CAVLC, CABAC, or the like, and output information about quantized transform coefficients about residuals required for image reconstruction. Among the information decoded by the entropy decoder 410, information about prediction may be provided to the predictor 440, and residual values on which entropy decoding is performed by the entropy decoder 410, e.g., quantized transform coefficients and related parameter information may be input to the dequantizer 420. Among the pieces of information decoded by the entropy decoder 410, information for filtering may be provided to the filter 460.

According to an embodiment, the dequantizer 420 may include various circuitry and dequantize quantized transform coefficients and output the transform coefficients. The dequantizer 420 may rearrange the quantized transform coefficients into a two-dimensional block shape. In this case, the rearrangement may be performed based on the coefficient scan order performed by the image encoding unit 112. The dequantizer 420 may perform dequantization on quantized transform coefficients using a quantization parameter (e.g., quantization step size information) and obtain transform coefficients.

According to an embodiment, the inverse transformer 430 may include various circuitry and obtain a residual signal (a residual block) by inverse-transforming transform coefficients.

According to an embodiment, the predictor 440 may include various circuitry and perform prediction on the current block and generate a predicted block including prediction samples of the current block. The predictor 440 may determine whether intra prediction is applied or inter prediction is applied to the current block based on the prediction information output from the entropy decoder 410 and may determine a specific intra/inter prediction mode (prediction technique). The intra predictor 441 may predict the current block by referencing samples in the current picture/frame. The inter predictor 442 may derive the predicted block for the current block, based on the reference block specified by the motion vector on the reference picture/frame. The respective operations of the intra predictor 441 and the inter predictor 442 correspond to the respective operations of the intra predictor 311 and the inter predictor 312 of the image encoding unit 112.

According to an embodiment, the adder 450 may include various circuitry and generate a reconstructed (reconstructed picture/frame, reconstructed block) by adding the residual signal obtained from the inverse transformer 430 to the prediction signal (predicted block) output from the predictor 440.

According to an embodiment, the filtering unit 460 may include a filter and enhance image quality by applying filtering to the reconstructed signal. For example, the filter 460 may generate a modified reconstructed picture/frame by applying various filtering methods to the reconstructed picture/frame, and may store the modified reconstructed picture/frame in the memory. The various filtering methods may include, e.g., deblocking filtering, sample adaptive offset, adaptive loop filter, or bilateral filter. The reconstructed picture/frame stored in the memory may be used as a reference picture/frame by the predictor 440. The memory may store motion prediction information about the block from which motion prediction information in the current picture/frame is derived (or decoded) and/or motion prediction information about blocks in the picture/frame that are already reconstructed. The memory may store reconstructed samples of reconstructed blocks in the current picture/frame, and the stored reconstructed samples may be delivered to the intra predictor 441.

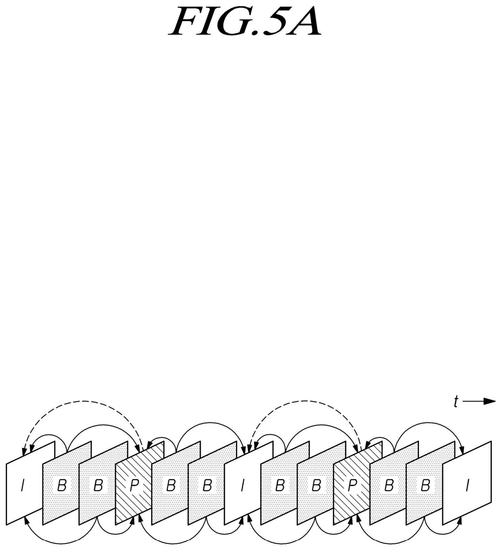

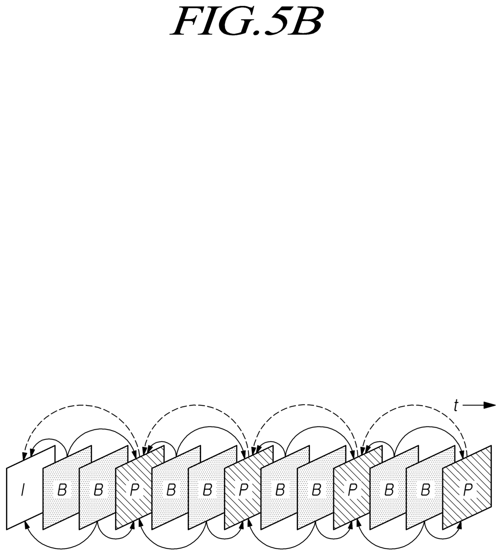

FIGS. 5A and 5B are diagrams illustrating an example image frame group according to an embodiment of the disclosure.

According to an embodiment, the image frame group may include a plurality of image frames (e.g., encoded frames). According to an embodiment, one image frame group may include an I frame, positioned at a starting portion, and at least one non-I frame frame, positioned between the corresponding I frame and the next I frame. For example, the image frame group may include an intra-frame (I frame), at least one predictive frame (P frame), and/or at least one bidirectional frame (B frame). For example, the image frame group may include an I frame positioned at the beginning of the image frame group, at least one P frame and/or at least one B frame positioned thereafter. In the disclosure, the image frame group may be referred to as a group of pictures (GOP). In the disclosure, image frame may be abbreviated as a frame.

According to an embodiment, the I frame corresponds to a key (e.g., important, vital) frame of an image frame group. The I frame is an independent image frame that does not depend on other image frames and may be decoded independently of other frames. The I frame may be, e.g., a frame in which original image data is stored as it is. The I frame has a larger capacity than other image frames. In the disclosure, the I frame may be referred to as a key frame.

According to an embodiment, the P frame may be a frame predicted by referencing a previous image frame (e.g., the I frame, the P frame, or the B frame). For example, at least one block (a block to be processed) belonging to a P frame may be predicted by referencing at least one block (a reference block) belonging to a previous frame. The P frame may be, e.g., the frame that stores the difference from the corresponding frame with respect to the previous I frame, the P frame, or the B frame. The P frame has a smaller capacity than the I frame. In the disclosure, the P frame may be referred to as a forward prediction frame or a one-way prediction frame.

According to an embodiment, the B frame may be a frame predicted by referencing a previous image frame (e.g., the I frame, the P frame, or the B frame) and a subsequent image frame (e.g., the I frame, the P frame, or the B frame). For example, at least one block (a block to be processed) belonging to frame B may be predicted by referencing at least one block belonging to a previous frame and at least one block (a reference block) belonging to a subsequent frame. The frame B may be, e.g., the frame positioned between the I frame and the frame P and storing a difference between a previous frame (e.g., the I frame) and a subsequent frame (e.g., the frame P). The B frame has a smaller capacity than the I frame and the P frame. In the disclosure, frame B may be referred to as a bi-directional prediction frame.

According to an embodiment, the image frame group may have a short structure or a long structure depending on the number of image frames grouped into one image frame group. For example, when the number of image frames grouped into one image frame group is 6 or less, the image frame group may correspond to a short image frame group (short GOP), and when the number of image frames grouped into one image frame group is 12 or more, the image frame group may correspond to a long image frame group (long GOP).

FIG. 5A illustrates an example of a short image frame group (short GOP). Referring to part of FIG. 5A, the first GOP may include, e.g., one I frame, one P frame, and four B frames. For example, in the first GOP, the first frame may be the I frame, the second frame may be the B frame referencing the previous I frame and the subsequent P frame, the third frame may be the B frame referencing the previous I frame and the subsequent P frame, the fourth frame may be the P frame referencing the previous I frame, the fifth frame may be the B frame referencing the previous P frame and the subsequent I frame (e.g., the I frame of the second GOP), and the sixth frame may be the B frame referencing the previous P frame and the subsequent I frame (e.g., the I frame of the second GOP). The second GOP may have, e.g., the same frame structure as the first GOP.

FIG. 5B illustrates an example of a long image frame group (long GOP). Referring to FIG. 5B, the first GOP (GOP) may include, e.g., one I frame, four or more P frames, and eight or more B frames. For example, in the corresponding GOP, the first frame may be the I frame, the second frame may be the B frame referencing the previous I frame and the subsequent P frame, the third frame may be the B frame referencing the previous I frame and the subsequent P frame, and the fourth frame may be the P frame referencing the previous I frame. Thereafter, similarly, the structure of two B frames and one P frame may be repeated within the corresponding GOP. An infinite GOP including only one I frame for the entire image data may be an example of a long GOP.

According to an embodiment, when each image frame (e.g., the I frame, the P frame, and the B frame) in the corresponding GOP is encoded at the same bit rate, better image quality may be provided than the image quality based on the P frame/B frame encoded by referencing other frames. Accordingly, when each image frame is encoded at the same bit rate, the image based on the long GOP and the infinite GOP may have a higher weight in the B/P frames than the I frame as compared with the image based on the short GOP, providing a better quality of image.

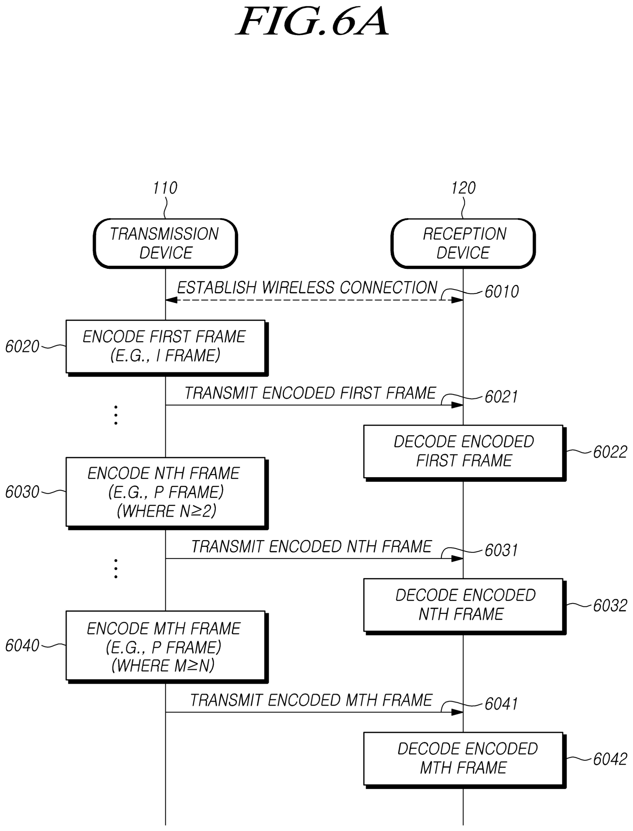

FIG. 6A is a signal flow diagram illustrating an example image processing procedure of an image processing system according to an embodiment of the disclosure.

The image processing procedure of FIG. 6A may be, e.g., an image processing procedure for one GOP (e.g., the first GOP of FIG. 5A or FIG. 5B) but is not limited thereto.

Referring to FIG. 6A, in operation 6010, the transmission device 110 and the reception device 120 may establish a wireless connection. According to an embodiment, the transmission device 110 and the reception device 120 may negotiate parameter(s) for establishing a wireless connection. The transmission device 110 and the reception device 120 may communicate with each other through the established wireless connection. According to an embodiment, operation 6010 may be omitted.

In operation 6020, the transmission device 110 may encode the first frame. According to an embodiment, the transmission device 110 may encode the first frame to generate an I frame. For example, as illustrated in FIGS. 5A and 5B, the transmission device 110 may encode, e.g., the first frame which is the frontmost frame of the first GOP, to generate the I frame.

In operation 6021, the transmission device 110 may transmit the encoded first frame (e.g., frame I) to the reception device 120. According to an embodiment, the transmission device 110 may transmit the encoded first frame to the reception device 120 using a plurality of first data packets. For example, the transmission device 110 may transmit the first data packet including the data of the encoded first frame to the reception device 120.

According to an embodiment, each first data packet may include data (or information) of at least one block belonging to the encoded first frame. For example, data of the plurality of blocks of the I frame may be included in one first data packet.

In operation 6022, the reception device 120 may decode the encoded first frame. According to an embodiment, the reception device 120 may receive a plurality of first data packets including data of the encoded first frame and may decode the encoded first frame based on the received first data packet. Accordingly, the first frame may be obtained (or reconstructed).

In operation 6030, the transmission device 110 may encode the Nth frame. Here, N≥2. According to an embodiment, the transmission device 110 may encode, e.g., the Nth frame of the GOP to which the first frame belongs, to generate a P frame (or a B frame). For example, as illustrated in FIGS. 5A and 5B, the transmission device 110 may encode, e.g., the second or third frame of the first GOP to generate frame B.

In operation 6031, the transmission device 110 may transmit the encoded Nth frame (e.g., frame P or frame B) to the reception device 120. According to an embodiment, the transmission device 110 may transmit a plurality of Nth data packets, including the data of the encoded Nth frame, to the reception device 120.

According to an embodiment, each Nth data packet may include data (or information) of at least one block belonging to the encoded Nth frame. For example, data of the plurality of blocks of the P frame or the B frame referencing each of the plurality of blocks of the previous frame may be included in one Nth data packet.

In operation 6032, the reception device 120 may decode the encoded Nth frame. According to an embodiment, the reception device 120 may receive a plurality of Nth data packets including the data of the encoded Nth frame and may decode the encoded Nth frame based on the received Nth data packet. Accordingly, the Nth frame may be obtained (or reconstructed).

In operation 6040, the transmission device 110 may encode the Mth frame. Here, M≥N. According to an embodiment, the transmission device 110 may generate a P frame (or B frame) by encoding the Mth frame of the GOP where the first frame belongs. For example, as illustrated in FIGS. 5A and 5B, the transmission device 110 may generate a P frame by encoding, e.g., a fourth frame of the first GOP.

In operation 6041, the transmission device 110 may transmit the encoded Mth frame (e.g., frame P or frame B) to the reception device 120. According to an embodiment, the transmission device 110 may transmit a plurality of Mth data packets including data of the encoded Mth frame to the reception device 120.

According to an embodiment, each Mth data packet may include data (or information) of at least one block belonging to the encoded Mth frame. For example, data of the plurality of blocks of the P frame or the B frame referencing each of the plurality of blocks of the previous frame may be included in one Mth data packet.

In operation 6042, the reception device 120 may decode the encoded Mth frame. According to an embodiment, the reception device 120 may receive a plurality of Mth data packets including data of the encoded Mth frame and may decode the encoded Mth frame based on the received Mth data packet. Accordingly, the Mth frame may be obtained (or reconstructed).

According to an embodiment, in operation 6022, 6032, or 6042, the reception device 120 may initiate decoding the encoded frame after receiving all of the plurality of data packets including the data of the encoded frame (hereinafter, referred to as a first decoding scheme). For example, in operation 6032, the reception device 120 may initiate decoding the encoded Nth frame at a time point when all of the plurality of Nth data packets including data of the encoded Nth frame are received.

In a situation where latency is critical (e.g., a streaming situation in a game mode), the reception device 120 may initiate decoding the encoded frame after receiving some data packets, rather than all the data packets, (e.g., at the time when reception of the first data packet is completed). According to an embodiment, in operation 6022, 6032, or 6042, the reception device 120 may initiate decoding of the encoded frame immediately after receiving some of the plurality of data packets including the data of the encoded frame (hereinafter, referred to as a second decoding scheme). For example, in operation 6032, the reception device 120 may initiate decoding the encoded Nth frame at a time point when some of the plurality of Nth data packets including data of the encoded Nth frame are received.

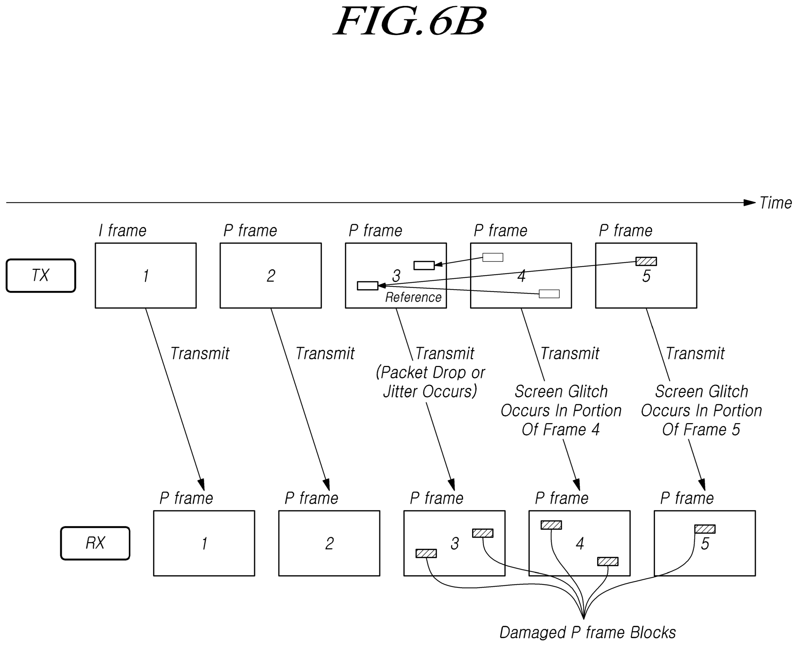

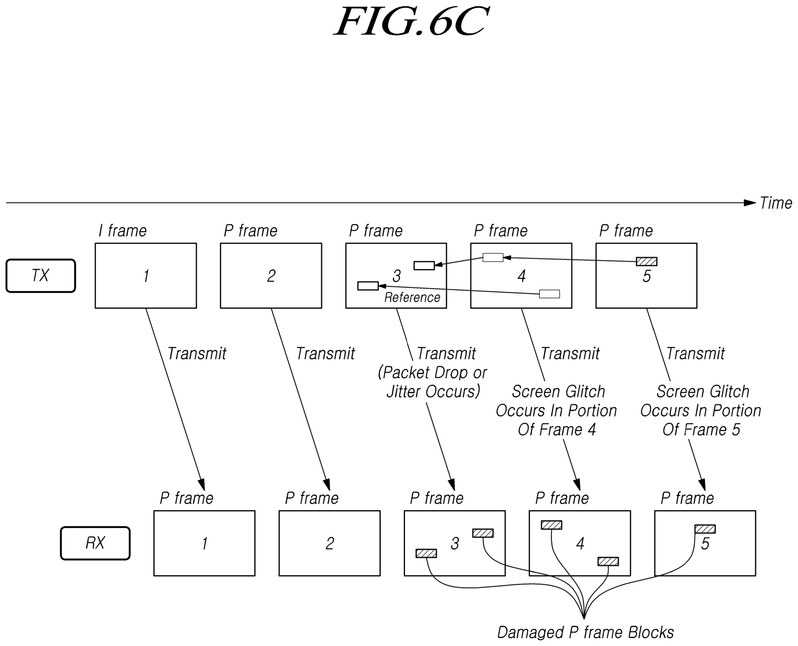

For example, in a case where the above-described second decoding scheme is used, if a corresponding data packet is not obtained by the reception device at the time when processing for the corresponding data packet is required (e.g., the exact time when decoding on the corresponding data packet is required) due to an error (e.g., packet loss (or drop) or jitter of the corresponding data packet due to network interference), a failure in decoding at least one block, associated with the corresponding data packet, may occur. An example in which a decoding failure occurs in an image processing procedure is described below with reference to FIGS. 6B and 6C.

FIGS. 6B and 6C are diagrams illustrating an example in which a decoding failure occurs in an image processing procedure according to an embodiment of the disclosure.

In the embodiments of FIGS. 6B and 6C, for convenience of description, frames following the I frame in the corresponding GOP are illustrated as the P frames, but the disclosure is not limited thereto. For example, as illustrated in FIGS. 5A and 5B, at least one B frame may be included as a frame following the I frame.

According to an embodiment, the transmission device 110 may encode a series of frames to generate encoded frames. For example, as illustrated in FIGS. 6B and 6C, the transmission device 110 may generate an I frame by encoding a first frame (i.e., frame 1), may generate a first P frame referencing the I frame by encoding a second frame (i.e., frame 2), may generate a second P frame referencing the previous frame (e.g., the I frame or first P frame) by encoding a third frame (i.e., frame 3), may generate a third P frame referencing the previous frame (e.g., the I frame, first P frame, or second P frame) by encoding a fourth frame (i.e., frame 4), and may generate a fourth P frame referencing a previous frame (e.g., the I frame, first P frame, second P frame, or third frame) by encoding a fifth frame (i.e., frame 5). For a description of generating an encoded frame by encoding a frame, a reference may be made to the description of 6020, 6030 or 6040 of FIGS. 5A, 5B and 6A. Therefore, a repeated description may not be provided.

According to an embodiment, the transmission device 110 may transmit the encoded frame to the reception device 120. For example, as illustrated in FIGS. 6B and 6C, the I frame, the first P frame, the second P frame, the third P frame, and the fourth P frame may be transmitted to the reception device 120 in the encoded time order. For the description of transmitting the encoded frame, a reference may be made to the description of 6021, 6031, or 6041 of FIG. 6A. Therefore, a duplicate description may not be repeated here.

According to an embodiment, the reception device 120 may receive the encoded frame and perform decoding on the encoded frame. For example, as illustrated in FIGS. 6B and 6C, decoding may be performed on the I frame, the first P frame, the second P frame, the third P frame, and the fourth P frame. For a description of performing decoding on the encoded frame, a reference may be made to the description of 6022, 6032, or 6042 of FIG. 6A. Therefore, a duplicate description may not be repeated here.

According to an embodiment, as described above with reference to FIG. 6A, after some of the plurality of data packets, including data of the encoded frame, are received, the reception device 120 may initiate decoding of the encoded frame (the second decoding scheme). As an example, the reception device 120 may initiate decoding on the I frame at the time when some of the plurality of data packets, including the data of the I frame, are received (e.g., at the time when reception of the first data packet is completed).

According to an embodiment, in a case where the above-described second decoding scheme is used, if the corresponding data packet is not transferred to the reception device at the exact time when processing for the corresponding data packet is required due to an error in the data packet, a decoding failure for at least one block associated with the corresponding data packet occurs. For example, as shown in FIGS. 6B and 6C, an error (e.g., packet drop or jitter) may occur in some of the plurality of packets including the data of the second P frame (i.e., frame 3) so that the corresponding data packet(s) may not be transferred to the reception device at the exact time. Thus, a decoding failure may occur for at least one block (e.g., two blocks) associated with the corresponding data packet(s) in the second P frame.

According to an embodiment, if a decoding failure occurs for the at least one block in the frame, a screen glitch (or screen distortion) may occur in the portion associated with the at least one block where the decoding failure occurs in the corresponding frame. For example, when a decoding failure occurs in two blocks in the second P frame as illustrated in FIGS. 6B and 6C, a screen glitch may occur in a portion of the decoded frame (i.e., frame 3) of the second P frame (e.g., the portion associated with the two blocks of the second P frame where the decoding failure occurs).

According to an embodiment, the at least one block, where the decoding failure occurs may be a block directly or indirectly referenced by at least one block in at least one subsequent frame. For example, as illustrated in FIG. 6B, the first block, of the two blocks where the decoding failure occurs in the second P frame, may be a block directly referenced by the first block of the third P frame which is the very next frame of the second P frame and the first block of the fourth P frame which is the very next frame of the third P frame, and the second block, of the two blocks where the decoding failure occurs, may be a block directly referenced by the second block of the third P frame. For example, as illustrated in FIG. 6C, each of the first block and the second block, of the two blocks where the decoding failure occurs in the second P frame, may be a block directly referenced by the first block and the second block of the third P frame which is the very next frame of the second P frame, and the second block, of the two blocks where the decoding failure occurs, may be a block indirectly referenced by the first block of the fourth P frame which is the very next frame of the third P frame. In the example of FIG. 6C, the first block of the fourth frame may indirectly reference the second block of the second P frame, e.g., through the second block of the third P frame.

According to an embodiment, the block directly or indirectly referencing the block where the decoding failure occurs may also cause a decoding failure. This is why the reception device decodes the block directly or indirectly referencing a block which is not normally (or successfully) decoded, using the block which is not normally (or successfully) decoded.

For example, as illustrated in 6B, the first block of the third P frame and the first block of the fourth P frame, which directly reference the first block where the decoding failure occurs in the second P frame, and the second block of the third P frame, which directly reference the second block where the decoding failure occurs in the second P frame, may also cause a decoding failure. In this case, a screen glitch may occur in a portion of the decoded frame (i.e., frame 4) of the third P frame (e.g., the portion associated with the first block and the second block of the third P frame where the decoding failure occurs), and a screen glitch may occur in a portion of the decoded frame (i.e., frame 5) of the fourth P frame (e.g., the portion associated with the first block of the fourth P frame where the decoding failure occurs).

For example, as illustrated in 6C, the first block and the second block of the third P frame which directly reference the first block and the second block where the decoding failure occurs in the second P frame may also cause a decoding failure. Further, the first block of the fourth P frame which indirectly references the second block where the decoding failure occurs in the second P frame by referencing the second block of the third frame where the decoding failure occurs also causes a decoding failure. In this case, a screen glitch may occur in a portion of the decoded frame (i.e., frame 4) of the third P frame (e.g., the portion associated with the first block and the second block of the third P frame where the decoding failure occurs), and a screen glitch may occur in a portion of the decoded frame (i.e., frame 5) of the fourth P frame (e.g., the portion associated with the first block of the fourth P frame where the decoding failure occurs).

As such, when the transmission device references the block where the decoding failure occurs in the reception device when encoding subsequent frame(s) (e.g., P frame or B frame), the reception device may not successfully decode at least one block in the subsequent frame(s) referencing the block where the decoding failure occurs. Thus, continuous or serial screen (or, image) glitches may occur. For example, as illustrated in FIGS. 6B and 6C, due to an error in the data packet, a screen glitch occurs in the subsequent third P frame and fourth P frame including at least one block directly or indirectly referencing the blocks of the second P frame, as well as the screen of the second P frame including the blocks where the decoding failure occurs.

Described below are various example embodiments for preventing and/or reducing a decoding failure from successively occurring by deterring the subsequent frames from referencing the block(s) of a frame where a decoding failure occurs.

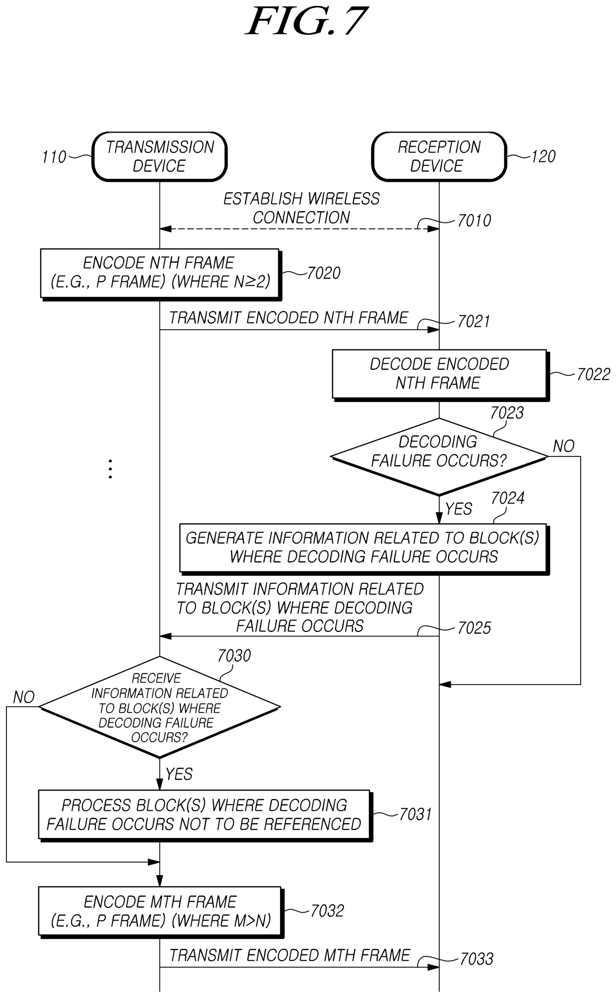

FIG. 7 is a signal flow diagram illustrating an example image processing procedure of an image processing system according to an embodiment of the disclosure.

The image processing procedure of FIG. 7 may be, e.g., an image processing procedure for one GOP (e.g., a first GOP of FIG. 5A or 5B) but is not limited thereto.

Referring to FIG. 7, in operation 7010, the transmission device 110 and the reception device 120 may establish a wireless connection. According to an embodiment, the transmission device 110 and the reception device 120 may negotiate parameter(s) for establishing a wireless connection. The transmission device 110 and the reception device 120 may communicate with each other through the established wireless connection. According to an embodiment, operation 7010 may be omitted.

In operation 7020, the transmission device 110 may encode the Nth frame. Here, N≥2. According to an embodiment, the transmission device 110 may generate a P frame (or a B frame) by encoding, e.g., the Nth frame of the GOP to which the previous frame referenced by the Nth frame belongs. For example, as illustrated in FIGS. 5A and 5B, the transmission device 110 may generate a P frame by encoding, e.g., a fourth frame of the first GOP. According to an embodiment, the first GOP may be a long GOP or an infinite GOP, and each frame belonging to the first GOP may be encoded using the same bit rate.

In operation 7021, the transmission device 110 may transmit the encoded Nth frame (e.g., frame P or frame B) to the reception device 120. According to an embodiment, the transmission device 110 may transmit a plurality of Nth data packets including the data of the encoded Nth frame to the reception device 120.

In operation 7022, the reception device 120 may decode the encoded Nth frame. According to an embodiment, the reception device 120 may receive a plurality of Nth data packets including the data of the encoded Nth frame and may decode the encoded Nth frame based on the received Nth data packet. For example, the reception device 120 may be configured to initiate decoding for the first frame after some of the plurality of data packets including data are received in the Nth frame transmitted from the transmission device 110.

According to an embodiment, each Nth data packet may include data (or information) of at least one block belonging to the encoded Nth frame. For example, data of the plurality of blocks of the P frame or the B frame referencing each of the plurality of blocks of the previous frame may be included in one Nth data packet.

In operation 7023, the reception device 120 may identify whether a decoding failure occurs for the encoded N frame. According to an embodiment, when it is identified that one or more data packets among the plurality of data packets, including data of the Nth frame transmitted from the transmission device, are not obtained at the time when processing for the corresponding data packet is required, the reception device 120 may identify that a decoding failure for the Nth frame occurs. For example, when the data packet is received after the time when processing for the data packet is required, due to the data packet being dropped or a jitter, the reception device 120 may identify that the corresponding data packet is not obtained at the time when processing for the data packet is required.

When an occurrence of a decoding failure is identified, operation 7024 and operation 7025 may be performed. When it is identified that no decoding failure occurs, operation 7024 and operation 7025 may not be performed.

In operation 7024, the reception device 120 may generate information about the block(s) where the decoding failure occurs. According to an embodiment, the information about the block(s) where the decoding failure occurs may be used for the transmission device to identify the block(s) where the decoding failure occurs and the frame where the corresponding block(s) belongs. According to an embodiment, the information about the block(s) where the decoding failure occurs may include block ID information about the block where the decoding failure occurs and the frame ID information about the frame where the corresponding block belongs. According to an embodiment, the block ID information may include information (e.g., block number or block ID) for identifying the block where the decoding failure occurs, and the frame ID information may include information (e.g., frame number or frame ID) for identifying the frame where the block where the decoding failure occurs belongs. In the disclosure, the block where the decoding failure occurs may be referred to as a damaged block, and the information about the block(s) where the decoding failure occurs may be referred to as damaged block-related information.

In operation 7025, the reception device 120 may transmit to the transmission device 110, the generated information (damaged block-related information) about the block(s) where the decoding failure occurs.

In operation 7030, the transmission device 110 may identify whether the information (damaged block-related information) about the block(s) where the decoding failure occurs is received from the reception device 120. When it is identified that the information about the block(s) where the decoding failure occurs is received, operation 7031 may be performed. When it is identified that the information about the block(s) where the decoding failure occurs is not received, operation 7032 may be performed immediately without performing operation 7031.

In operation 7031, the transmission device 110 may perform processing so that the block(s) where the decoding failure occurs are not referenced by subsequent frame(s) based on the information (damaged block-related information) about the block(s) where the decoding failure occurs. According to an embodiment, the transmission device may identify the block(s) where the decoding failure occurs and the frame where the corresponding block(s) belong, based on the information about the block(s) where the decoding failure occurs and perform processing so that the block(s) where the decoding failure occurs in the corresponding frame are not referenced by frame(s) subsequent to the corresponding frame.

In operation 7032, the transmission device 110 may encode the Mth frame. Here, M>N. According to an embodiment, the transmission device 110 may generate a P frame (or B frame) by encoding the Mth frame of the GOP where the first frame belongs. For example, as illustrated in FIGS. 5A and 5B, the transmission device 110 may generate a B frame referencing a previous P frame and a subsequent I frame (or subsequent P frame) by encoding the sixth frame of the first GOP.

According to an embodiment, the Mth frame may be a frame encoded after the information (damaged block-related information) about the block(s) where the decoding failure occurs is received.

According to an embodiment, the transmission device 110 may encode the Mth frame based on the information (damaged block-related information) about the block(s) where the decoding failure occurs.

According to an embodiment, the transmission device may identify the block(s) where the decoding failure occurs and the Nth frame where the corresponding block(s) belong, based on the information (damaged block-related information) about the block(s) where the decoding failure occurs and perform processing so that the block(s) where the decoding failure occurs in the Nth frame are not referenced by the block(s) in the Mth frame.

For example, to perform processing so that the block(s) (hereinafter, a first block(s)) where the decoding failure occurs in the Nth frame are not referenced by the block(s) in the Mth frame, the transmission device 110 may mask the first block(s) where the decoding failure occurs in the Nth frame stored in the frame buffer. The masked first block(s) may not be referenced by the blocks of other subsequent frames.

For example, to perform processing so that the first block(s) where the decoding failure occurs in the Nth frame are not referenced by the block(s) in the Mth frame, the transmission device 110 may identify the block(s) (hereinafter, second block(s)) configured to reference the block(s) where the decoding failure occurs in the Nth frame among the blocks in the Mth frame and process (or generate) the corresponding second block(s) as an intra block. According to an embodiment, the intra block may be an independent block that does not reference another block (or does not depend on other blocks). In the disclosure, generating (or processing) a block configured to reference a block where a decoding failure occurs as an intra block may be referred to as intra refresh.

For example, to perform processing so that the first block(s) where the decoding failure occurs in the Nth frame are not referenced by the block(s) in the Mth frame, the transmission device 110 may identify the block(s) (hereinafter, third block(s)) referencing the first block(s) in at least one frame encoded before receiving the damaged block-related information, identify the block(s) (hereinafter, second block(s)) configured to reference at least one among the first block(s) or third block(s) among the blocks in the Mth frame, and process (or generate) the corresponding second block(s) as an intra block.

It is possible to allow none of the blocks in the encoded Mth frame to reference the block(s) where the decoding failure occurs through the processing for deterring the blocks in the subsequent frames from referencing the block(s) where the decoding failure occurs. Accordingly, the Mth frame decoded in the reception device 120 does not experience a screen glitch.

In operation 7033, the transmission device 110 may transmit the encoded Mth frame (e.g., frame P or frame B) to the reception device 120. According to an embodiment, the transmission device 110 may transmit a plurality of Mth data packets including data of the encoded Mth frame to the reception device 120.

According to an embodiment, each Mth data packet may include data (or information) of at least one block belonging to the encoded Mth frame. For example, data of the plurality of blocks of the P frame or the B frame referencing each of the plurality of blocks of the previous frame (e.g., the Nth frame) may be included in one Nth data packet.

Although the embodiment described above with reference to FIG. 7 illustrates image processing procedures by the transmission device 110 and the reception device 120 for the N frame for convenience of description, the description of the embodiment of FIG. 7 is not limited to the image processing procedure on the N frame. For example, the same embodiment may also apply to the I frame which is the first frame of the GOP where the N frame belongs and the M frame which is the frame subsequent to the N frame. For example, the description of operations 7022 to 7025 and operations 7030 to 7031 of FIG. 7 may be equally applied to I frames and M frames.

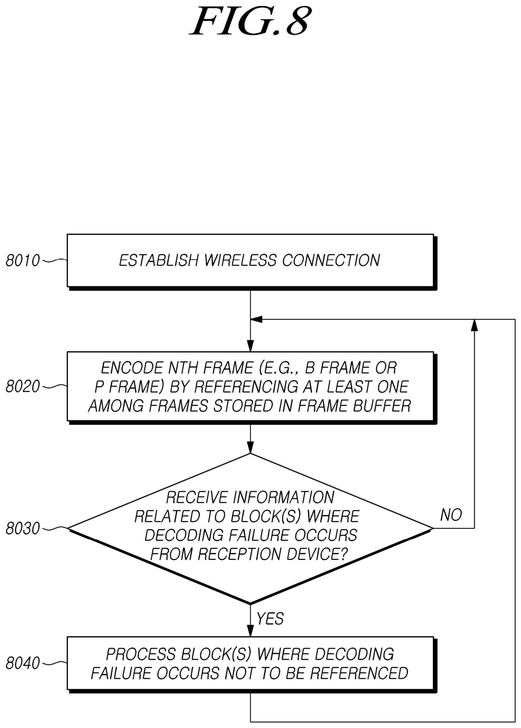

FIG. 8 is a flowchart illustrating example operations of a transmission device in an image processing procedure according to an embodiment of the disclosure.

The image processing procedure according to the embodiment of FIG. 8 may be an example of the image processing procedure of FIG. 7. The description of the image processing procedure of FIG. 7 may be referred to for the description of the image processing procedure of FIG. 8.

Referring to FIG. 8, in operation 8010, a transmission device (e.g., the transmission device 110 of FIGS. 1A, 1B, and 2) may establish a wireless connection with a reception device (e.g., the reception device 120 of FIGS. 1A, 1C, and 2). For the description of operation 8010, a reference may be made to the description of operation 7010. Therefore, a duplicate description may not be repeated here. According to an embodiment, operation 8010 may be omitted.

In operation 8020, the transmission device 110 may encode the Nth frame. Here, N≥2. Operation 8020 may be, e.g., an example of operation 7020 of FIG. 7.

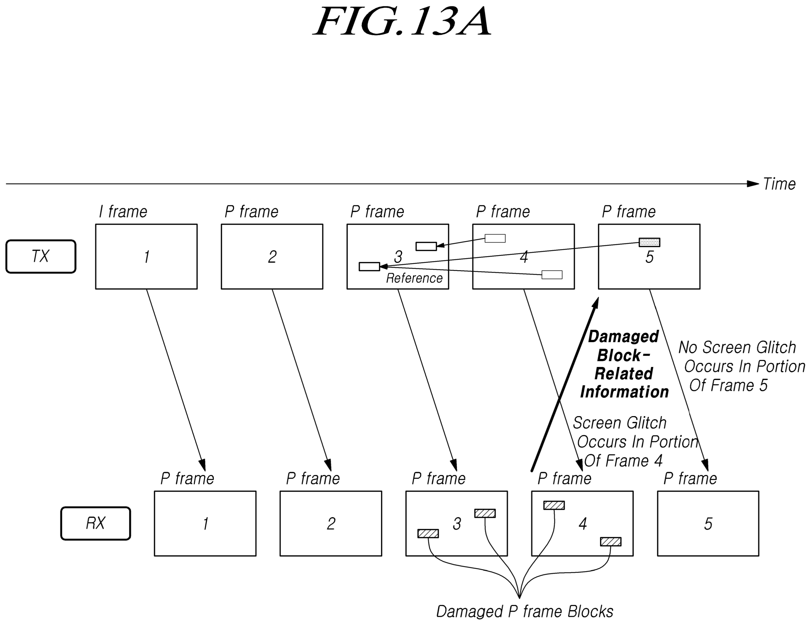

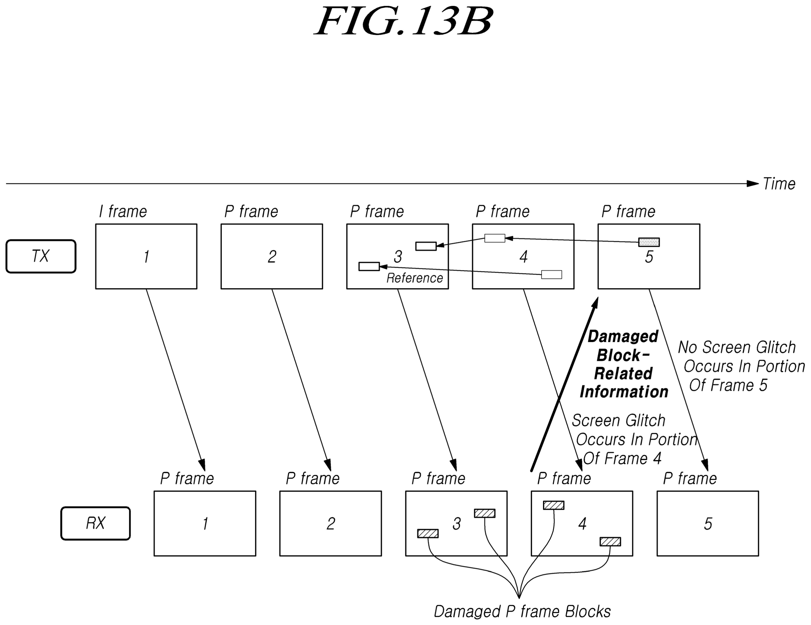

According to an embodiment, the transmission device 110 may encode the Nth frame by referencing at least one of the frames stored in the frame buffer. For example, as illustrated in FIGS. 13A and 13B, the transmission device 110 may generate a P frame by encoding frame 3 by referencing frame 1 or frame 2 stored in the frame buffer. The encoded frame may be transmitted to the reception device 120. For example, as illustrated in FIGS. 13A and 13B, the transmission device 110 may transmit at least one data packet including data of the generated P frame to the reception device 120. Each data packet may include, e.g., data (or information) of at least one associated block belonging to the P frame.

In operation 8030, the transmission device 110 may receive the information (damaged block-related information) about the block(s) where the decoding failure occurs from the reception device 120. For example, as illustrated in FIGS. 13A and 13B, the transmission device 110 may receive the information about the block(s) where the decoding failure occurs, which belongs to frame 3, from the reception device 120. When it is identified that the information about the block(s) where the decoding failure occurs is received, operation 8040 may be performed. When it is identified that the information about the block(s) where the decoding failure occurs is not received, operation 8020 may be performed again for a next frame without performing operation 8040. For the description of the damaged block-related information and reception of the information, a reference may be made to operations 7024 and 7025 of FIG. 7.

In operation 8040, the transmission device 110 may perform processing so that the block(s) where the decoding failure occurs are not referenced by subsequent frame(s) based on the information (damaged block-related information) about the block(s) where the decoding failure occurs. For example, as illustrated in FIGS. 13A and 13B, the transmission device 110 may identify the first block(s) where the decoding failure occurs in frame 3 based on the damaged block-related information received from the reception device 120 and mask the first block(s) in frame 3 stored in the frame buffer so that the first block(s) where the decoding failure occurs are not referenced by the second block(s) in frame 5. For example, as illustrated in FIG. 13A, the transmission device 110 may identify the first block(s) where the decoding failure occurs in frame 3 based on the damaged block-related information received from the reception device 120 and generate (or process) the second block(s) configured to reference the first block(s) as an intra block so that the first block(s) where the decoding failure occurs are not directly referenced by the second block(s) in frame 5. For example, as illustrated in FIG. 13A, the transmission device 110 may identify the first block(s) where the decoding failure occurs in frame 3 and identify the third block(s) referencing the first block(s) in frame 4, based on the damaged block-related information received from the reception device 120, and generate (or process) the second block(s) configured to reference the third block(s) as an intra block so that the first block(s) where the decoding failure occurs are not indirectly referenced by the second block(s) in frame 5. For the description of operation 8040, a reference may be made to the description of operation 7031 of FIG. 7. Therefore, a duplicate description may be repeated here. Thereafter, the transmission device 110 may perform operation 8020 again.

In operation 8020, the transmission device 110 may encode the N+1th frame by referencing at least one of frames stored in the frame buffer.

As such, the transmission device 110 may repeatedly performing operations 8020 to 8040 to encode the frames which belong to the corresponding GOP in chronological order and transmit them to the reception device 120. In this case, none of the blocks included in the frame encoded after the damaged block information about the corresponding frame is received reference the block(s) where the decoding failure occurs, identified based on the damaged block information. Therefore, the frame encoded after receiving the damaged block information does not experience screen glitch. In other words, serial screen glitches may be prevented and/or reduced.

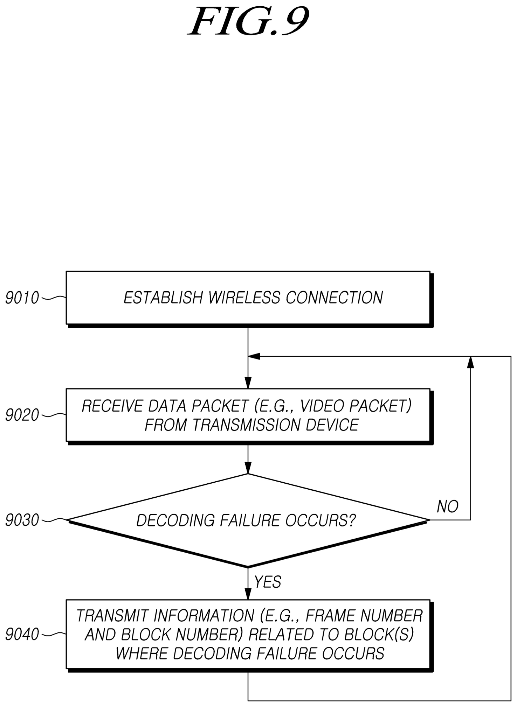

FIG. 9 is a flowchart illustrating example operations of a reception device in an image processing procedure according to an embodiment of the disclosure.

The image processing procedure according to the embodiment of FIG. 9 may be an example of the image processing procedure of FIG. 7. The description of the image processing procedure of FIG. 7 may be referred to for the description of the image processing procedure of FIG. 9.

Referring to FIG. 9, in operation 9010, a reception device (e.g., the reception device 120 of FIGS. 1A, 1C, and 2) may establish a wireless connection with a transmission device (e.g., the transmission device 110 of FIGS. 1A, 1B, and 2). For the description of operation 9010, a reference may be made to the description of operation 7010. Therefore, a duplicate description may not be repeated here. According to an embodiment, operation 9010 may be omitted.

In operation 9020, the reception device 120 may receive, from the transmission device 110, at least one Nth data packet (e.g., video packet) including data of an encoded Nth frame (e.g., P frame or B frame). According to an embodiment, the reception device 120 may receive the Nth data packet (e.g., the video packet) including data (or information) associated with at least one block of the encoded Nth frame from the transmission device 110. For example, as illustrated in FIGS. 13A and 13B, the reception device 120 may receive the data packet including data associated with at least one block of frame 3 (e.g., P frame) from the transmission device 110.

In operation 9030, the reception device 120 may identify whether a decoding failure occurs. According to an embodiment, the reception device 120 may perform decoding on the received Nth data packet, identifying whether a decoding failure occurs for the corresponding Nth data packet (or at least one block in the encoded Nth frame included in the corresponding Nth data packet). For example, as illustrated in FIGS. 13A and 13B, the reception device 120 may identify whether a decoding failure occurs for the data packet including the data associated with at least one block of frame 3 (e.g., P frame). For example, when the reception device 120 does not obtain the corresponding packet at the time when processing (e.g., decoding) for the corresponding data packet is required due to the corresponding data packet being dropped or a jitter, the reception device 120 may identify that a decoding failure occurs for the corresponding data packet. When it is identified that the decoding failure occurs, operation 9040 may be performed. When it is identified that no decoding failure occurs, operation 9020 may be performed again without performing operation 9040.

In operation 9040, the reception device 120 may generate information (damaged block-related information) about the block(s) where the decoding failure occurs and transmit the information to the transmission device 110. For example, as illustrated in FIGS. 13A and 13B, the reception device 120 may transmit to the transmission device 110 damaged block-related information including the block ID information about the block where the decoding failure occurs in frame 3 and the frame ID information about frame 3. For the description of operation 9040, a reference may be made to the description of operations 7024 and 7025 of FIG. 7. Therefore, a duplicate description may not be repeated here. Thereafter, operation 9020 may be performed again.

In operation 9020, the reception device 120 may receive an Nth data packet received later. Thereafter, the reception device 120 may perform operations 9030 to 9040 again.

As such, the reception device 120 may repeatedly perform operations 9020 to 9040, transmitting information (damaged block-related information) about the block(s) where the decoding failure occurs and the frame including the block(s) to the transmission device 110. Through transmission of the damaged block-related information, the transmission device 110 may perform processing so that the frame encoded after receiving the damaged block-related information does not reference the block(s) identified by the damaged block-related information. The processed frames do not have decoding failure and thus experience no screen glitch.

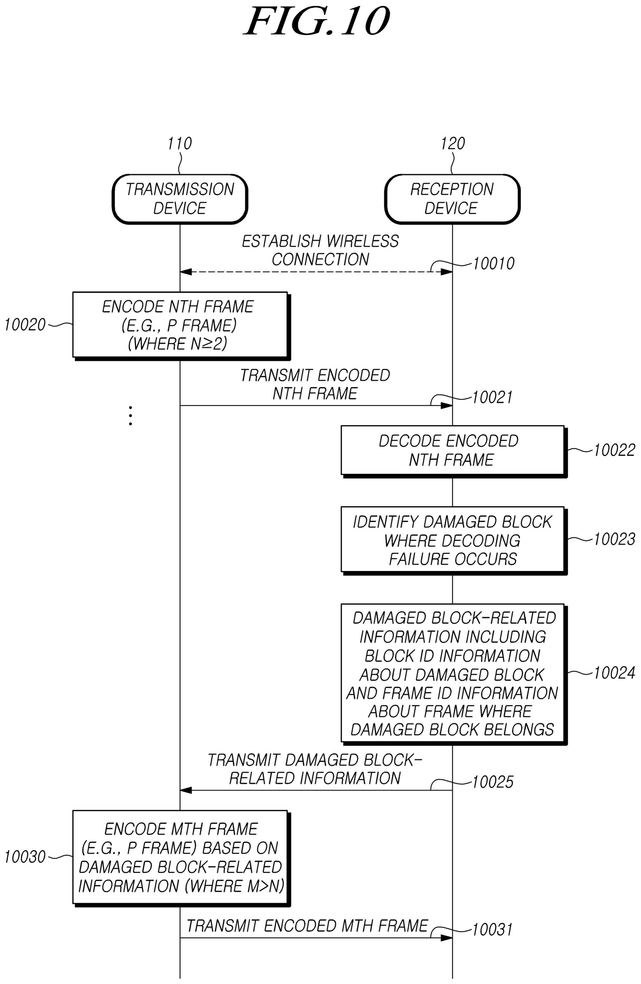

FIG. 10 is a signal flow diagram illustrating an example image processing procedure of an image processing system according to an embodiment of the disclosure.

The image processing procedure of FIG. 10 may be, e.g., an image processing procedure for one GOP (e.g., a first GOP of FIGS. 5A or 5B) but is not limited thereto. The image processing procedure of FIG. 10 may be an example of the image processing procedure of FIG. 7. Thus, the description of the image processing procedure of FIG. 7 may be referred to for the description of the image processing procedure of FIG. 10.

Referring to FIG. 10, in operation 10010, the transmission device 110 and the reception device 120 may establish a wireless connection. According to an embodiment, the transmission device 110 and the reception device 120 may negotiate parameter(s) for establishing a wireless connection. The transmission device 110 and the reception device 120 may communicate with each other through the established wireless connection. According to an embodiment, operation 10010 may be omitted.

In operation 10020, the transmission device 110 may encode the Nth frame. Here, N≥2. For the description of operation 10020, a reference may be made to the description of operation 7020 of FIG. 7. Therefore, a duplicate description may not be repeated here.

In operation 10021, the transmission device 110 may transmit the encoded Nth frame (e.g., frame P or frame B) to the reception device 120. For the description of operation 10021, a reference may be made to the description of operation 7021 of FIG. 7. Therefore, a duplicate description is not repeated here.

In operation 10022, the reception device 120 may decode the encoded Nth frame. For the description of operation 10022, a reference may be made to the description of operation 7022 of FIG. 7. Therefore, a duplicate description may not be repeated here.

In operation 10023, the reception device 120 may identify a damaged block where a decoding failure occurs. According to an embodiment, when it is identified that one or more data packets among a plurality of data packets including data in the Nth frame transmitted from the transmission device are not obtained at the time when processing for the corresponding data packet is required, the reception device 120 may identify that a decoding failure occurs for the Nth frame and identify the block where the decoding failure occurs (damaged block) in the Nth frame based on the data packet (e.g., the sequence number of the data packet) where the decoding failure occurs. For example, when the data packet is received after the time when processing for the data packet is required, due to the data packet being dropped or a jitter, the reception device 120 may identify that the corresponding data packet is not obtained at the time when processing for the corresponding data packet is required and identify the block (damaged block) where the decoding failure occurs in the Nth frame based on the data packet (e.g., the sequence number of the data packet) where the decoding failure occurs. For the description of operation 10023, a reference may be made to the description of operation 7023 of FIG. 7. Therefore, a duplicate description may not be repeated here.

In operation 10024, the reception device 120 may generate damaged block-related information including block ID information about the damaged block where the decoding failure occurs and frame ID information about the frame where the damaged block belongs. For the description of operation 10024, a reference may be made to the description of operation 7024 of FIG. 7. Therefore, a duplicate description may not be repeated here.

In operation 10025, the reception device 120 may transmit the damaged block-related information to the transmission device 110.

In operation 10030, the transmission device 110 may encode the Mth frame encoded after receiving the damaged block-related information based on the damaged block-related information about the Nth frame. For the description of operation 10030, a reference may be made to the description of operations 7030, 7031, and 7032 of FIG. 7. Therefore, a duplicate description may not be repeated here.

According to an embodiment, the transmission device 110 may receive the damaged block-related information about the Nth frame, frames (e.g., two frames) after the Nth frame due to a delay time (or, latency). The transmission device 110 may perform encoding on the frames using the damaged block-related information about the Nth frame from the Nth frame until before the damaged block-related information about the Nth frame is received. Accordingly, at least one block of the frames before receiving the damaged block-related information about the Nth frame may reference the damaged blocks where a decoding failure occurs in the Nth frame, resulting in a screen glitch.

According to an embodiment, the delay time (or, latency) may be determined based on, e.g., the decoding time of the reception device, the time of generation of the damaged block-related information, and/or the time of transmission of the damaged block-related information.

In operation 10031, the transmission device 110 may transmit the encoded Mth frame (e.g., frame P or frame B) to the reception device 120. For the description of operation 10031, a reference may be made to the description of operation 7033 of FIG. 7. Therefore, a duplicate description may not be repeated here.

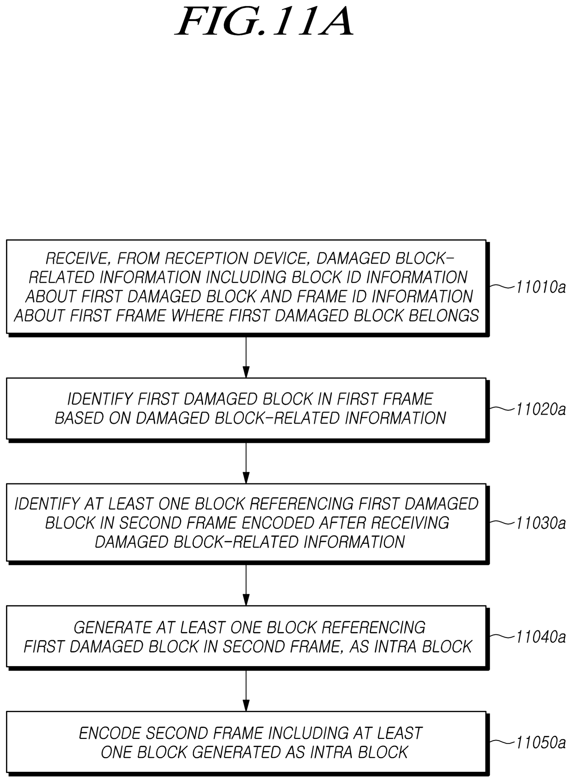

FIG. 11A is a flowchart illustrating example operations of a transmission device in an image processing procedure according to an embodiment of the disclosure.

The image processing procedure according to the embodiment of FIG. 11A may be an example of the image processing procedure of FIG. 10. The description of the image processing procedure of FIG. 11A may be referred to for the description of the image processing procedure of FIG. 10.

Referring to FIG. 11A, in operation 11010a, the transmission device 110 may receive, from the reception device 120, damaged block-related information including block ID information about a first damaged block where a decoding failure occurs and frame ID information about a first frame where the first damaged block belongs. For example, as illustrated in FIG. 13A, the transmission device 110 may receive the damaged block-related information about frame 3 from the reception device 120. The damaged block-related information about frame 3 may include the block ID information about the first damaged block in frame 3 and the frame ID information about frame 3.

In operation 11020a, the transmission device 110 may identify the first damaged block in the first frame based on the damaged block-related information. For example, as illustrated in FIG. 13A, the transmission device may identify the first damaged block in frame 3 based on the damaged block-related information about frame 3.

In operation 11030a, the transmission device 110 may identify at least one block referencing the first damaged block in the second frame encoded after the damaged block-related information is received. For example, as illustrated in FIG. 13A, the transmission device 110 may identify the block referencing the damaged block in frame 3, in (or from) frame 5, which is encoded after the damaged block-related information is received.

In operation 11040a, the transmission device 110 may generate at least one block referencing the first damaged block in the second frame, as an intra block. For example, as illustrated in FIG. 13A, the transmission device 110 may generate a block directly referencing the damaged block in frame 3 in (or from) frame 5, as an intra block.

In operation 11050a, the transmission device 110 may encode the second frame including at least one block generated as the intra block. For example, as illustrated in FIG. 13A, the transmission device 110 may generate a P frame (or B frame) by encoding frame 5 including the block generated as the intra block.

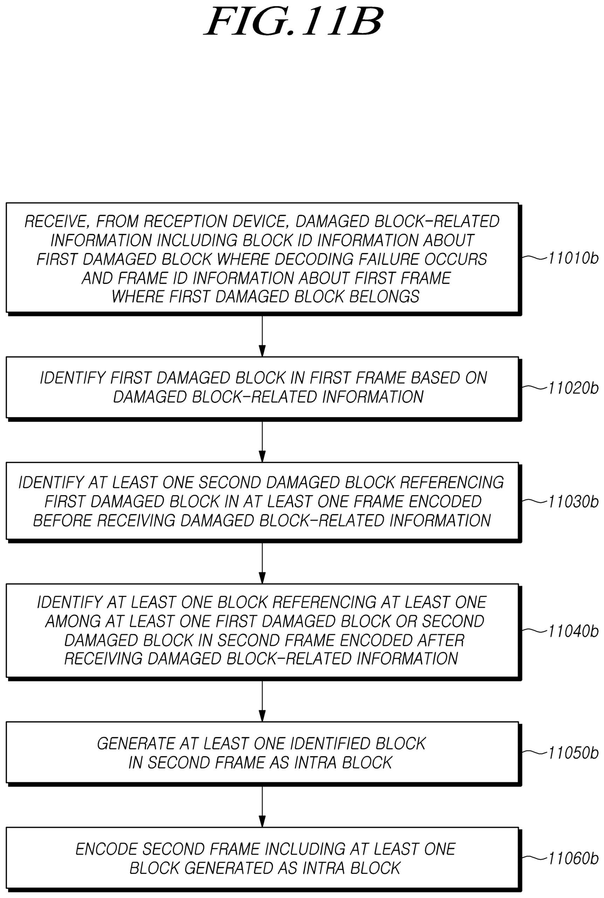

FIG. 11B is a flowchart illustrating example operations of a transmission device in an image processing procedure according to an embodiment of the disclosure.

The image processing procedure according to the embodiment of FIG. 11B may be an example of the image processing procedure of FIG. 10. The description of the image processing procedure of FIG. 11B may be referred to for the description of the image processing procedure of FIG. 10.

Referring to FIG. 11B, in operation 11010b, the transmission device 110 may receive, from the reception device 120, damaged block-related information including block ID information about a first damaged block where a decoding failure occurs and frame ID information about a first frame where the first damaged block belongs. For example, as illustrated in FIG. 13B, the transmission device 110 may receive the damaged block-related information about frame 3 from the reception device 120. The damaged block-related information about frame 3 may include the block ID information about the first damaged block in frame 3 and the frame ID information about frame 3.

In operation 11020b, the transmission device 110 may identify the first damaged block in the first frame based on the damaged block-related information. For example, as illustrated in FIG. 13B, the transmission device may identify the first damaged block in frame 3 based on the damaged block-related information about frame 3.

In operation 11030b, the transmission device 110 may identify at least one second damaged block referencing the first damaged block in at least one frame encoded before the damaged block-related information is received. For example, as illustrated in FIG. 13B, the transmission device 110 may identify the second damaged block referencing the first damaged block of frame 3 in frame 4 encoded before the damaged block-related information is received.

In operation 11040b, the transmission device 110 may identify at least one block referencing at least one of the first damaged block or at least one second damaged block in the second frame encoded after the damaged block-related information is received. For example, as illustrated in FIG. 13B, the transmission device 110 may identify the block referencing the second damaged block in frame 4, in frame 5 encoded after the damaged block-related information is received. The block of frame 5 may indirectly reference the first damaged block of frame 3 through the second damaged block of frame 4.

In operation 11050b, the transmission device 110 may generate at least one identified block in the second frame, as an intra block. For example, as illustrated in FIG. 13B, the transmission device 110 may generate a block referencing the second damaged block of frame 4 among the blocks in frame 5, as an intra block.

In operation 11060b, the transmission device 110 may encode the second frame including at least one block generated as the intra block. For example, as illustrated in FIG. 13A, the transmission device 110 may generate a P frame (or B frame) by encoding frame 5 including the block generated as the intra block.

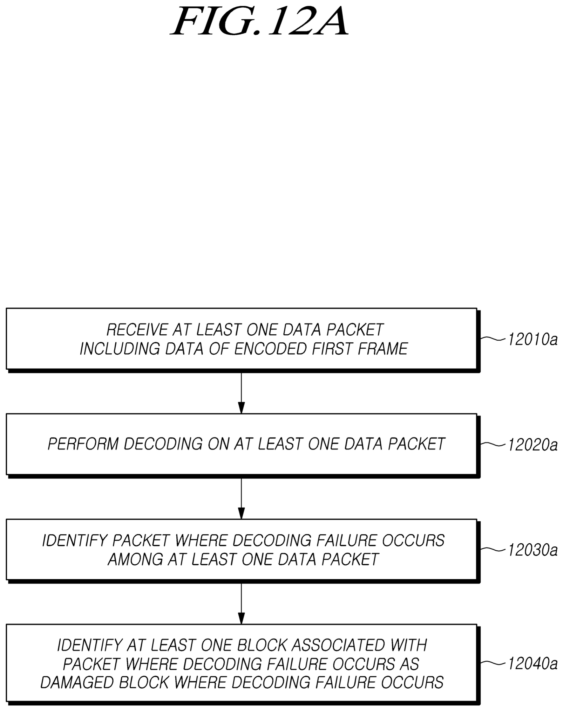

FIG. 12A is a flowchart illustrating example operations of a reception device in an image processing procedure according to an embodiment of the disclosure.

The image processing procedure according to the embodiment of FIG. 12A may be an example of the image processing procedure of FIG. 10. The description of the image processing procedure of FIG. 12A may be referred to for the description of the image processing procedure of FIG. 10.

Referring to FIG. 12A, in operation 12010a, the reception device 120 may receive, from the transmission device 110, at least one data packet including data of an encoded first frame. For example, as illustrated in FIGS. 13A and 13B, the reception device 120 may receive at least one data packet including the data of frame 3 (e.g., P frame) from the transmission device 110. For the description of operation 12010a, a reference may be made to the description of operation 10021 of FIG. 10. Therefore, a duplicate description may not be repeated here.

In operation 12020a, the reception device 120 may perform decoding on at least one data packet. For example, as illustrated in FIGS. 13A and 13B, the reception device 120 may perform decoding on at least one data packet for frame 3. For the description of operation 12020a, a reference may be made to the description of operation 10022 of FIG. 10. Therefore, a duplicate description may not be repeated here.

In operation 12030a, the reception device 120 may identify the packet where the decoding failure occurs among the at least one data packet. For example, as illustrated in FIGS. 13A and 13B, the reception device 120 may identify the data packet(s) including the data (or information) associated with the first damaged block among the at least one data packet for frame 3, as the packet where the decoding failure occurs. For example, when it is identified that one or more data packets among the plurality of data packets including the data for frame 3 transmitted from the transmission device 110 are not obtained at the time when processing for the corresponding data packet is required, the reception device 120 may identify that a decoding failure occurs for the corresponding data packet. For example, when the data packet is received after the time when processing for the data packet is required, due to the data packet being dropped or a jitter, the reception device 120 may identify that the corresponding data packet is not obtained at the time when processing for the data packet is required.

The data packet where the decoding failure occurs may include data of at least one first damaged block. For example, as illustrated in FIGS. 13A and 13B, the data packet where the decoding failure occurs may include the data of at least one first damaged block in frame 3.

In operation 12040a, the reception device 120 may identify at least one block associated with the packet where the decoding failure occurs, as the damaged block where the decoding failure occurs. For example, as illustrated in FIGS. 13A and 13B, the reception device 120 may identify the first damaged block in frame 3 associated with the packet(s) where the decoding failure occurs, as the damaged block where the decoding failure occurs.

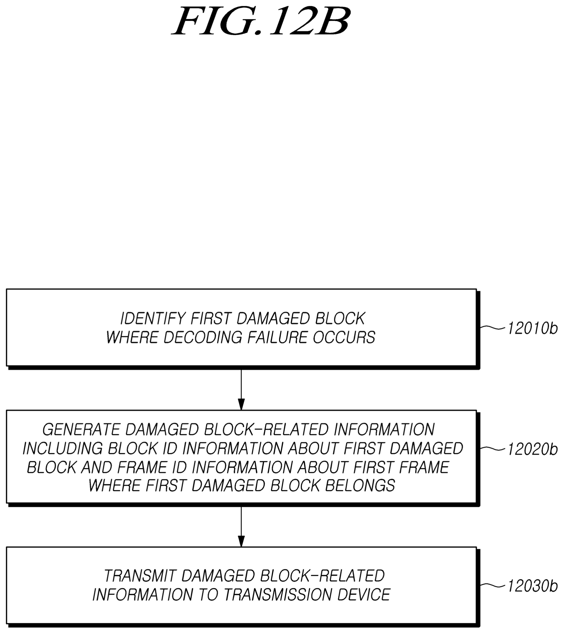

FIG. 12B is a flowchart illustrating example operations of a reception device in an image processing procedure according to an embodiment of the disclosure.

The image processing procedure according to the embodiment of FIG. 12B may be an example of a process in which a reception device including operations 10023 to 10025 of the image processing procedure of FIG. 10 generates and transmits damaged block-related information. The description of the image processing procedure of FIG. 12B may be referred to for the description of the image processing procedure of FIG. 10.

In operation 12010b, the reception device 120 may identify a first damaged block where a decoding failure occurs. For example, as illustrated in FIGS. 13A and 13B, the reception device 120 may identify the first damaged block in frame 3 as the damaged block where the decoding failure occurs. For the description of operation 12010b, a reference may be made to the description of operation 10023 of FIG. 10. Therefore, a duplicate description may not be repeated here.

In operation 12020b, the reception device 120 may generate damaged block-related information including block ID information about the first damaged block where the decoding failure occurs and frame ID information about the first frame where the first damaged block belongs. For example, as illustrated in FIGS. 13A and 13B, the reception device 120 may generate damaged block-related information including block ID information about the first damaged block in frame 3 and frame ID information about frame 3. For the description of operation 12020b, a reference may be made to the description of operation 10024 of FIG. 10. Therefore, a duplicate description may not be repeated here.

In operation 12030b, the reception device 120 may transmit the damaged block-related information to the transmission device 110. For example, as illustrated in FIGS. 13A and 13B, the reception device 120 may transmit, to the transmission device 110, damaged block-related information including the block ID information about the first damaged block in frame 3 and the frame ID information about frame 3.

FIGS. 13A and 13B are diagrams illustrating an example method for preventing/reducing a decoding failure in an image processing procedure according to an embodiment of the disclosure.

In the embodiments of FIGS. 13A and 13B, for convenience of description, frames following the I frame are illustrated as P frames, but the disclosure is not limited thereto. For example, as illustrated in FIGS. 5A and 5B, at least one B frame may be included as a frame following the I frame.

The embodiment of FIG. 13A may be an example method for preventing and/or reducing a decoding failure through intra refresh on blocks directly referencing a block where a decoding failure occurs, identified based on damaged block-related information.

The embodiment of FIG. 13B may be an example method for preventing and/or reducing a decoding failure through intra refresh on blocks indirectly referencing a block where a decoding failure occurs, identified based on damaged block-related information.

According to an embodiment, the transmission device 110 may encode a series of frames in chronological order to generate encoded frames. For example, as illustrated in FIGS. 13B and 13C, the transmission device 110 may generate an I frame by encoding a first frame (frame 1), may generate a first P frame referencing the I frame by encoding a second frame (frame 2), may generate a second P frame referencing the previous frame (e.g., the I frame or first P frame) by encoding a third frame (frame 3), may generate a third P frame referencing the previous frame (e.g., the I frame, first P frame, or second P frame) by encoding a fourth frame (frame 4), and may generate a fourth P frame referencing a previous frame (e.g., the I frame, first P frame, second P frame, or third frame) by encoding a fifth frame (frame 5). For a description of generating an encoded frame by encoding a frame, a reference may be made to the description of 6020, 6030 or 6040 of FIGS. 5 and 6A. Therefore, a duplicate description may not be repeated here.

According to an embodiment, the transmission device 110 may transmit the encoded frame to the reception device 120. For example, as illustrated in FIGS. 13A and 13B, the transmission device 110 may transmit, in chronological order, the I frame, the first P frame, the second P frame, the third P frame, and the fourth P frame to the reception device 120. For the description of transmitting the encoded frame, a reference may be made to the description of 6021, 6031, or 6041 of FIG. 6. Therefore, a duplicate description may not be repeated here.

According to an embodiment, the reception device 120 may receive the encoded frame and perform decoding on the encoded frame. For example, as illustrated in FIGS. 13A and 13B, decoding may be performed on the I frame, the first P frame, the second P frame, the third P frame, and the fourth P frame. For a description of performing decoding on the encoded frame, a reference may be made to the description of 6022, 6032, or 6042 of FIG. 6A. Therefore, a duplicate description may not be repeated here.

According to an embodiment, as described above with reference to FIG. 6A, after some of the plurality of data packets including data of the encoded frame are received, the reception device 120 may initiate decoding of the encoded frame (the second decoding scheme). As an example, the reception device 120 may initiate decoding on the I frame at the time when some of the plurality of data packets including the data of the I frame are received (e.g., at the time when reception of the first data packet is completed).

According to an embodiment, in a case where the above-described second decoding scheme is used, if the corresponding data packet is not transferred to the reception device at the exact time when processing for the corresponding data packet is required due to an error in the data packet, a decoding failure for at least one block associated with the corresponding data packet may occur. For example, as shown in FIGS. 13A and 13B, an error (e.g., packet drop or jitter) may occur in some of the plurality of packets including the data of the second P frame (frame 3) so that the corresponding data packet(s) may not be transferred to the reception device at the exact time. Thus, a decoding failure may occur for at least one block (e.g., two blocks) associated with the corresponding data packet(s) in the second P frame.

According to an embodiment, if a decoding failure occurs for the at least one block in the frame, a screen glitch may occur in the portion associated with the at least one block where the decoding failure occurs in the corresponding frame. For example, when a decoding failure occurs in two blocks in the second P frame as illustrated in FIGS. 13A and 13B, a screen glitch may occur in a portion of the decoded frame (i.e., frame 3) of the second P frame (e.g., the portion associated with the two blocks of the second P frame where the decoding failure occurs). For a description of blocks that directly or indirectly reference the block where a decoding failure occurs, a reference may be made to the descriptions of FIGS. 6B and 6C. Therefore, a duplicate description may not be repeated here.

According to an embodiment, the block directly or indirectly referencing the block where the decoding failure occurs may also cause a decoding failure. This is why the reception device decodes the block directly or indirectly referencing a block, which is not normally decoded, using the block which is not normally decoded. For a description of occurrence of a decoding failure in blocks that directly or indirectly reference the block where a decoding failure occurs, a reference may be made to the descriptions of FIGS. 6B and 6C. Therefore, a duplicate description may not be provided here.

As such, if the transmission device references the block where the decoding failure occurs in the reception device when encoding subsequent frame(s) (e.g., P frame or B frame), the reception device may not successfully decode at least one block in the subsequent frame(s) referencing the block where the decoding failure occurs. For example, as illustrated in FIGS. 13A and 13B, due to an error in the data packet, a screen glitch may occur in the subsequent third P frame including at least one block referencing the blocks of the second P frame, as well as the screen of the second P frame including the blocks where the decoding failure occurred.

However, in the embodiment of FIGS. 13A and 13B, the transmission device 110 may receive from the reception device 120, damaged block-related information about frame 3 before performing encoding on, e.g., frame 5. In this case, the transmission device 110 may identify the first damaged block(s) where the decoding failure occurs in frame 3 based on the damaged block-related information about frame 3. The transmission device 110 may perform processing so that the first damaged block(s) in frame 3 is not referenced by the blocks of other frames encoded after the damaged block-related information is received. For example, as illustrated in FIGS. 13A and 13B, the transmission device 110 may generate the blocks in frame 5, as intra blocks, so that the blocks in frame 5 encoded after the damaged block-related information about frame 3 is received directly or indirectly reference the first damaged block(s). The transmission device 110 may generate a P frame (or B frame) by encoding frame 5 generated as the intra block. As such, unlike in the embodiment of FIGS. 6B and 6C in which damaged block-related information is not used, in the case of using the damaged block-related information received from the reception device, no serial screen glitches occur. As illustrated in FIGS. 13A and 13B, frame 5, which is encoded after the damaged block-related information is received, does not experience screen glitch.

According to an embodiment, a reception device in an image processing system may comprise: a communication unit comprising communication circuitry, memory storing a program including at least one instruction, and at least one processor, comprising processing circuitry, connected to the communication unit and the memory and executing the at least one instruction of the program stored in the memory.

According to an embodiment, at least one processor, individually and/or collectively, may be configured to control the reception device to: receive, from a transmission device, at least one data packet including data of a first frame, perform decoding on the first frame based on the at least one data packet, identify whether a failure in decoding on the first frame occurs, and based on identifying that the failure in decoding on the first frame occurring, transmit, to the transmission device, first information related to at least one first block where the decoding failure occurs, wherein the first information may include block ID information about the at least one first block where the decoding failure occurs and frame ID information about the first frame where the at least one first block belongs.

According to an embodiment, at least one processor, individually and/or collectively, may be configured to control the reception device to: based on identifying that one or more data packets among a plurality of data packets including data of the first frame transmitted from the transmission device not being obtained at a time when processing on the one or more data packets is required, identify that the failure in decoding on the first frame occurs, wherein the one or more data packets may include the data of the at least one first block.

According to an embodiment, the one or more data packets may be identified as not obtained at the time when the processing on the one or more data packets is required as the one or more data packets are received after the time when the processing on the one or more data packets is required due to being dropped or a jitter.

According to an embodiment, at least one processor, individually and/or collectively, may be configured to control the reception device to: initiate decoding on the first frame based on receiving some of a plurality of data packets including data of the first frame transmitted from the transmission device.

According to an embodiment, the first frame may include a frame referenced by at least one frame subsequent to the first frame.

According to an embodiment, the first frame may include an intra frame (I frame), a predictive frame (P frame), or a bidirectional frame (B frame) of a first group of pictures (GOP), and the at least one frame may be a P frame or a B frame of the first GOP referencing the first frame.

According to an embodiment, the first GOP may be a long GOP or an infinite GOP, and the first frame and the at least one frame may be encoded using the same bit rate.

According to an embodiment, a transmission device in an image processing system may comprise a communication unit comprising communication circuitry, memory storing a program including at least one instruction, and at least one processor, comprising processing circuitry, connected to the communication unit and the memory and executing the at least one instruction of the program stored in the memory.

According to an embodiment, at least one processor, individually and/or collectively, may be configured to control the transmission device to: transmit, to a reception device, at least one data packet including data of a first frame, receive, from the reception device, first information related to at least one block where a decoding failure in the first frame occurs, the first information including block ID information about the at least one first block where the decoding failure occurs and frame ID information about the first frame where the at least one first block belongs, identify the at least one first block in the first frame based on the first information, process the at least one first block not to be referenced by blocks in a second frame encoded based on the first information being received, and perform encoding on the second frame.

According to an embodiment, to process the at least one first block not to be referenced by the blocks in the second frame encoded based on the first information being received, at least one processor, individually and/or collectively, may be configured to: identify at least one second block configured to reference the at least one first block in the second frame encoded after the first information is received and process the identified at least one second block as an intra block including an independent block not dependent on another block.

According to an embodiment, to process the at least one first block not to be referenced by the blocks in the second frame encoded based on the first information being received, at least one processor, individually and/or collectively, may be configured to: identify at least one third block referencing the first block in at least one third frame encoded before the first information is received; identify at least one second block configured to reference the at least one first block or the at least one third block in the second frame encoded after the first information is received and process the identified at least one second block as an intra block which is an independent block not dependent on another block.

According to an embodiment, to process the at least one first block not to be referenced by the blocks in the second frame encoded after the first information is received, at least one processor, individually and/or collectively may be configured to mask the at least one first block in the first frame stored in a buffer.

According to an embodiment, the first frame may include a frame referenced by at least one frame subsequent to the first frame.

According to an embodiment, the first frame may include an I frame, a P frame, or a B frame of a first GOP, the second frame may be the P frame or the B frame of the first GOP referencing the first frame or the third frame, and the third frame may be the P frame or the B frame of the first GOP referencing the first frame.

According to an embodiment, the first GOP may be a long GOP or an infinite GOP, and wherein the first frame, the second frame, and the third frame may be encoded using the same bit rate.

According to an embodiment, a method of operating a reception device in an image processing system may comprise: receiving, from a transmission device, at least one data packet including data of a first frame, performing decoding on the first frame based on the at least one data packet, identifying whether a failure in decoding on the first frame occurs, and based on identifying that the failure in decoding on the first frame occurs, transmitting, to the transmission device, first information related to at least one first block where the decoding failure occurs, wherein the first information may include block ID information about the at least one first block where the decoding failure occurs and frame ID information about the first frame where the at least one first block belongs.

According to an embodiment, identifying whether the failure in decoding on the first frame occurs may include: based on identifying that one or more data packets among a plurality of data packets including data of the first frame transmitted from the transmission device not being obtained at a time when processing on the one or more data packets is required, identifying that the failure in decoding on the first frame occurs. The one or more data packets may include the data of the at least one first block.

According to an embodiment, the first frame may include an I frame, a P frame, or a B frame of a first GOP, and the at least one frame subsequent to the first frame may include a P frame or a B frame of the first GOP referencing the first frame.

According to an embodiment, a method of operating a transmission device in an image processing system may comprise: transmitting, to a reception device, at least one data packet including data of a first frame, receiving, from the reception device, first information related to at least one block where a decoding failure in the first frame occurs, the first information including block ID information about the at least one first block where the decoding failure occurs and frame ID information about the first frame where the at least one first block belongs, identifying the at least one first block in the first frame based on the first information, processing the at least one first block not to be referenced by blocks in a second frame encoded based on the first information being received, and performing encoding on the second frame.

According to an embodiment, processing the at least one first block not to be referenced by blocks in the second frame encoded after the first information is received may include: identifying at least one second block configured to reference the at least one first block in the second frame encoded after the first information is received and processing the identified at least one second block as an intra block including an independent block not dependent on another block.

According to an embodiment, processing the at least one first block not to be referenced by blocks in the second frame encoded based on the first information being received may include: identifying at least one third block referencing the first block in at least one third frame encoded before the first information is received, identifying at least one second block configured to reference the at least one first block or the at least one third block in the second frame encoded after the first information is received and processing the identified at least one second block as an intra block which is an independent block not dependent on another block.

In the above-described various example embodiments, the components included in the disclosure are represented in singular or plural forms depending on specific embodiments. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A reception device in an image processing system, comprising:
a communication unit comprising communication circuitry;
memory storing a program including at least one instruction; and
at least one processor, comprising processing circuitry, connected to the communication unit and the memory and configured to execute the at least one instruction of the program stored in the memory, wherein at least one processor, individually and/or collectively, is configured to control the reception device to:
receive, from a transmission device, at least one data packet including data of a first frame;
perform decoding on the first frame based on the at least one data packet;
identify whether a failure in decoding on the first frame occurs; and
based on identifying that the failure in decoding on the first frame occurs, transmit, to the transmission device, first information related to at least one first block where the decoding failure occurs,
wherein the first information includes block identifier (ID) information about the at least one first block where the decoding failure occurs and frame ID information about the first frame to which the at least one first block belongs.

2. The reception device of claim 1, wherein at least one processor, individually and/or collectively, is configured to, based on identifying that one or more data packets among a plurality of data packets including data of the first frame transmitted from the transmission device are not obtained at a time when processing on the one or more data packets is required, identify that the failure in decoding on the first frame occurs, and
wherein the one or more data packets include the data of the at least one first block.

3. The reception device of claim 2, wherein the one or more data packets are identified as not obtained at the time when the processing on the one or more data packets is required as the one or more data packets are received after the time when the processing on the one or more data packets is required due to being dropped or a jitter.

4. The reception device of claim 1, wherein at least one processor, individually and/or collectively, is configured to initiate decoding on the first frame after receiving some of a plurality of data packets including data of the first frame transmitted from the transmission device.

5. The reception device of claim 1, wherein the first frame includes a frame referenced by at least one frame subsequent to the first frame.

6. The reception device of claim 5, wherein the first frame includes an intra frame (I frame), a predictive frame (P frame), or a bidirectional frame (B frame) of a first group of pictures (GOP), and the at least one frame includes a P frame or a B frame of the first GOP referencing the first frame.

7. The reception device of claim 6, wherein the first GOP is a long GOP or an infinite GOP, and wherein the first frame and the at least one frame are encoded using the same bit rate.

8. A transmission device in an image processing system, comprising:
a communication unit comprising communication circuitry;
memory storing a program including at least one instruction; and
at least one processor, comprising processing circuitry, connected to the communication unit and the memory and configured to execute the at least one instruction of the program stored in the memory, wherein at least one processor, individually and/or collectively, is configured to control the transmission device to:
transmit, to a reception device, at least one data packet including data of a first frame;
receive, from the reception device, first information related to at least one block where a decoding failure in the first frame occurs, the first information including block identifier (ID) information about the at least one first block where the decoding failure occurs and frame ID information about the first frame to which the at least one first block belongs;
identify the at least one first block in the first frame based on the first information;
process the at least one first block not to be referenced by blocks in a second frame encoded based on the first information being received; and
perform encoding on the second frame.

9. The transmission device of claim 8, wherein to process the at least one first block not to be referenced by the blocks in the second frame encoded based on the first information being received, at least one processor, individually and/or collectively, is configured to:
identify at least one second block configured to reference the at least one first block in the second frame encoded after the first information is received; and
process the identified at least one second block as an intra block including an independent block not dependent on another block.

10. The transmission device of claim 8, wherein to process the at least one first block not to be referenced by the blocks in the second frame encoded based on the first information being received, at least one processor, individually and/or collectively, is configured to:
identify at least one third block referencing the first block in at least one third frame encoded before the first information is received;
identify at least one second block configured to reference the at least one first block or the at least one third block in the second frame encoded after the first information is received; and
process the identified at least one second block as an intra block including an independent block not dependent on another block.

11. The transmission device of claim 8, wherein to process the at least one first block not to be referenced by the blocks in the second frame encoded based on the first information being received, at least one processor, individually and/or collectively, is configured to mask the at least one first block in the first frame stored in a buffer.

12. The transmission device of claim 10, wherein the first frame includes a frame referenced by at least one frame subsequent to the first frame.

13. The transmission device of claim 12, wherein the first frame includes an I frame, a P frame, or a B frame of a first GOP, the second frame includes the P frame or the B frame of the first GOP referencing the first frame or the third frame, and the third frame includes the P frame or the B frame of the first GOP referencing the first frame, andwherein the first GOP is a long GOP or an infinite GOP, and wherein the first frame, the second frame, and the third frame are encoded using the same bit rate.

14. A method of operating a reception device in an image processing system, the method comprising:
receiving, from a transmission device, at least one data packet including data of a first frame;
performing decoding on the first frame based on the at least one data packet;
identifying whether a failure in decoding on the first frame occurs; and
based on identifying that the failure in decoding on the first frame occurs, transmitting, to the transmission device, first information related to at least one first block where the decoding failure occurs,
wherein the first information includes block ID information about the at least one first block where the decoding failure occurs and frame ID information about the first frame to which the at least one first block belongs.

15. A method of operating a transmission device in an image processing system, the method comprising:
transmitting, to a reception device, at least one data packet including data of a first frame;
receiving, from the reception device, first information related to at least one block where a decoding failure in the first frame occurs, the first information including block ID information about the at least one first block where the decoding failure occurs and frame ID information about the first frame to which the at least one first block belongs;
identifying the at least one first block in the first frame based on the first information;
processing the at least one first block not to be referenced by blocks in a second frame encoded based on the first information being received; and
performing encoding on the second frame.
